# EUROPEAN PATENT SPECIFICATION

(11) **EP 4 097 925 B1**
(45) Date of publication and mention of the grant of the patent: **20.08.2025**
(21) Application number: 21708791.5
(22) Date of filing: 26.01.2021
(51) Int. Cl.: H04L 43/028, H04L 43/045, H04L 41/122, H04L 41/40, H04L 43/20, H04L 41/14, H04L 41/0853, H04L 41/0893, H04L 41/0896, H04L 41/0631, H04L 43/0805, H04L 43/0876, H04L 41/0895

(54) **SYSTEMS AND METHODS FOR INTELLIGENT SEGMENTATION AND RENDERING OF COMPUTER ENVIRONMENT DATA**
SYSTEME UND VERFAHREN ZUR INTELLIGENTEN SEGMENTIERUNG UND DARSTELLUNG VON COMPUTERUMGEBUNGSDATEN
SYSTÈMES ET PROCÉDÉS DE SEGMENTATION ET DE RENDU INTELLIGENTS DE DONNÉES D'ENVIRONNEMENT INFORMATIQUE

(30) Priority: 27.01.2020 US 202062966461 P
(43) Date of publication of application: 07.12.2022
(73) Proprietor: Acentium Inc., Boston, Massachusetts 02123 (US)
(72) Inventor: HAMDI, Amine, Boston, Massachusetts 02114 (US)
(74) Representative: Murgitroyd & Company
(86) International application number: PCT/US2021/015076
(87) International publication number: WO 2021/154720

(56) References cited:
- EP-A2- 1 768 043
- US-A1- 2018 124 072
- US-B1- 9 516 053
- US-B1- 9 992 230

## Description

### CROSS-REFERENCE TO RELATED APPLICATIONS

This application claims priority to, and the benefit of, U.S. Provisional Application No. 62/966,461 filed on January 27, 2020, and entitled "SYSTEMS AND METHODS FOR INTELLIGENT SEGMENTATION AND RENDERING OF COMPUTER ENVIRONMENT DATA".

### FIELD OF THE DISCLOSURE

The present application relates generally to systems and methods for intelligent segmentation (or "slicing") and rendering of computer environment data. Specifically, the present application relates to a reliable and computationally efficient approach for segmenting computer environment data according to predefined categories and current asset states, and generating separate visual representations for separate categories. US 2018/124072 discloses methods for computer environmental situational awareness.

### SUMMARY OF THE DISCLOSURE

The present invention is defined in the appended independent claims to which reference should be made. Advantageous features are set out in the appended dependent claims.

### BRIEF DESCRIPTION OF THE DRAWINGS

FIG. 1A is a block diagram depicting an embodiment of a computing and network environment.
FIGS. 1B-1D are block diagrams depicting embodiments of computers useful in connection with the methods and systems described herein.
FIG. 2 is a block diagram illustrating an example computer environment hosting a plurality of solutions or subsystems.
FIG. 3 shows a block diagram illustrating various phases, states or aspects of a solution or subsystem.
FIG. 4 shows a flowchart illustrating a method of monitoring deployed solution stacks or subsystems, according to example embodiments.
FIGS. 5A-5D show various 2D visual representations illustrating various architectures associated with a SKYPE for Business solution within a given geographical location.
FIGS. 6A-6C show 3D visual representations of the architectures depicted in FIGS. 5B-5D of the SKYPE for Business solution are shown.
FIG. 7 shows a flowchart illustrating a method for intelligent segmentation and rendering of computer environment data, according to example embodiments.
FIG. 8 shows a diagram illustrating an example network of assets associated with a computer environment, according to example embodiments.
FIGS. 9A-9C show example filtered versions of the network of assets in FIG. 8.
FIGS. 10A-10B show two different visual representations of a solution in a computer environment, according to example embodiments.
FIGS. 11A-11C show visual representations of a first set of slices of the solution shown in FIGS. 10A and 10B, according to example embodiments.
FIGS. 12A-12C show other visual representations of the first set of slices in 11A-11C, according to example embodiments.
FIGS. 13A-13C show visual representations of a second set of slices of the solution shown in FIGS. 10A and 10B, according to example embodiments.

### DETAILED DESCRIPTION

For purposes of reading the description of the various embodiments below, the following descriptions of the sections of the specification and their respective contents may be helpful:
Section A describes a computing and network environment which may be useful for practicing embodiments described herein.
Section B describes monitoring solution stacks or subsystems of a computer ecosystem.
Section C describes solution stack monitoring as a diagnosis tool.
Section D. describes intelligent segmentation and rendering of computer environment data.

### A. Computing and Network Environment

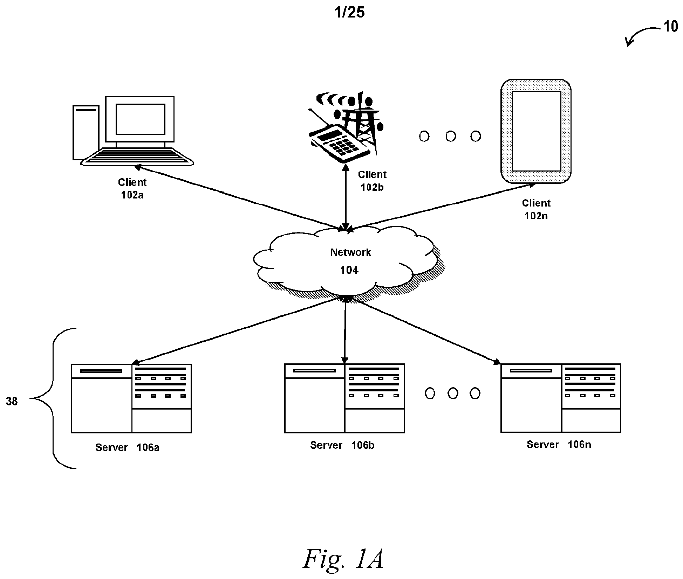

In addition to discussing specific embodiments of the present solution, it may be helpful to describe aspects of the operating environment as well as associated system components (e.g., hardware elements) in connection with the methods and systems described herein. Referring to FIG. 1A, an embodiment of a computing and network environment 10 is depicted. In brief overview, the computing and network environment 10, also referred to herein as a computer environment 10, includes one or more clients 102a-102n (also generally referred to as local machine(s) 102, client(s) 102, client node(s) 102, client machine(s) 102, client computer(s) 102, client device(s) 102, endpoint(s) 102, or endpoint node(s) 102) in communication with one or more servers 106a-106n (also generally referred to as server(s) 106, node 106, or remote machine(s) 106) via one or more networks 104. In some embodiments, a client 102 has the capacity to function as both a client node seeking access to resources provided by a server and as a server providing access to hosted resources for other clients 102a-102n.

Although FIG. 1A shows a network 104 between the clients 102 and the servers 106, the clients 102 and the servers 106 may be on the same network 104. In some embodiments, there are multiple networks 104 between the clients 102 and the servers 106. In one of these embodiments, a network 104' (not shown) may be a private network and a network 104 may be a public network. In another of these embodiments, a network 104 may be a private network and a network 104' a public network. In still another of these embodiments, networks 104 and 104' may both be private networks.

The network 104 may be connected via wired or wireless links. Wired links may include Digital Subscriber Line (DSL), coaxial cable lines, or optical fiber lines. The wireless links may include BLUETOOTH, Wi-Fi, Worldwide Interoperability for Microwave Access (WiMAX), an infrared channel or satellite band. The wireless links may also include any cellular network standards used to communicate among mobile devices, including standards that qualify as 1G, 2G, 3G, or 4G. The network standards may qualify as one or more generation of mobile telecommunication standards by fulfilling a specification or standards such as the specifications maintained by International Telecommunication Union. The 3G standards, for example, may correspond to the International Mobile Telecommunications-2000 (IMT-2000) specification, and the 1G standards may correspond to the International Mobile Telecommunications Advanced (IMT-Advanced) specification. Examples of cellular network standards include AMPS, GSM, GPRS, UMTS, LTE, LTE Advanced, Mobile WiMAX, and WiMAX-Advanced. Cellular network standards may use various channel access methods e.g. FDMA, TDMA, CDMA, or SDMA. In some embodiments, different types of data may be transmitted via different links and standards. In other embodiments, the same types of data may be transmitted via different links and standards.

The network 104 may be any type and/or form of network. The geographical scope of the network 104 may vary widely and the network 104 can be a body area network (BAN), a personal area network (PAN), a local-area network (LAN), e.g. Intranet, a metropolitan area network (MAN), a wide area network (WAN), or the Internet. The topology of the network 104 may be of any form and may include, e.g., any of the following: point-to-point, bus, star, ring, mesh, or tree. The network 104 may be an overlay network which is virtual and sits on top of one or more layers of other networks 104'. The network 104 may be of any such network topology as known to those ordinarily skilled in the art capable of supporting the operations described herein. The network 104 may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite may include application layer, transport layer, internet layer (including, e.g., IPv6), or the link layer. The network 104 may be a type of a broadcast network, a telecommunications network, a data communication network, or a computer network.

In some embodiments, the computing and network environment 10 may include multiple, logically-grouped servers 106. In one of these embodiments, the logical group of servers may be referred to as a server farm 38 or a machine farm 38. In another of these embodiments, the servers 106 may be geographically dispersed. In other embodiments, a machine farm 38 may be administered as a single entity. In still other embodiments, the machine farm 38 includes a plurality of machine farms 38. The servers 106 within each machine farm 38 can be heterogeneous - one or more of the servers 106 or machines 106 can operate according to one type of operating system platform (e.g., WINDOWS 8 or 10, manufactured by Microsoft Corp. of Redmond, Washington), while one or more of the other servers 106 can operate on according to another type of operating system platform (e.g., Unix, Linux, or Mac OS X).

In one embodiment, servers 106 in the machine farm 38 may be stored in high-density rack systems, along with associated storage systems, and located in an enterprise data center. In this embodiment, consolidating the servers 106 in this way may improve system manageability, data security, the physical security of the system, and system performance by locating servers 106 and high performance storage systems on localized high performance networks. Centralizing the servers 106 and storage systems and coupling them with advanced system management tools allows more efficient use of server resources.

The servers 106 of each machine farm 38 do not need to be physically proximate to another server 106 in the same machine farm 38. Thus, the group of servers 106 logically grouped as a machine farm 38 may be interconnected using a wide-area network (WAN) connection or a metropolitan-area network (MAN) connection. For example, a machine farm 38 may include servers 106 physically located in different continents or different regions of a continent, country, state, city, campus, or room. Data transmission speeds between servers 106 in the machine farm 38 can be increased if the servers 106 are connected using a local-area network (LAN) connection or some form of direct connection. Additionally, a heterogeneous machine farm 38 may include one or more servers 106 operating according to a type of operating system, while one or more other servers 106 execute one or more types of hypervisors rather than operating systems. In these embodiments, hypervisors may be used to emulate virtual hardware, partition physical hardware, virtualize physical hardware, and execute virtual machines that provide access to computing environments, allowing multiple operating systems to run concurrently on a host computer. Native hypervisors may run directly on the host computer. Hypervisors may include VMware ESX/ESXi, manufactured by VMWare, Inc., of Palo Alto, California; the Xen hypervisor, an open source product whose development is overseen by Citrix Systems, Inc.; the HYPER-V hypervisors provided by Microsoft or others. Hosted hypervisors may run within an operating system on a second software level. Examples of hosted hypervisors may include VMware Workstation and VIRTUALBOX.

Management of the machine farm 38 may be de-centralized. For example, one or more servers 106 may comprise components, subsystems and modules to support one or more management services for the machine farm 38. In one of these embodiments, one or more servers 106 provide functionality for management of dynamic data, including techniques for handling failover, data replication, and increasing the robustness of the machine farm 38. Each server 106 may communicate with a persistent store and, in some embodiments, with a dynamic store.

Server 106 may be a file server, application server, web server, proxy server, appliance, network appliance, gateway, gateway server, virtualization server, deployment server, SSL VPN server, firewall, Internet of Things (IoT) controller. In one embodiment, the server 106 may be referred to as a remote machine or a node. In another embodiment, a plurality of nodes 290 may be in the path between any two communicating servers.

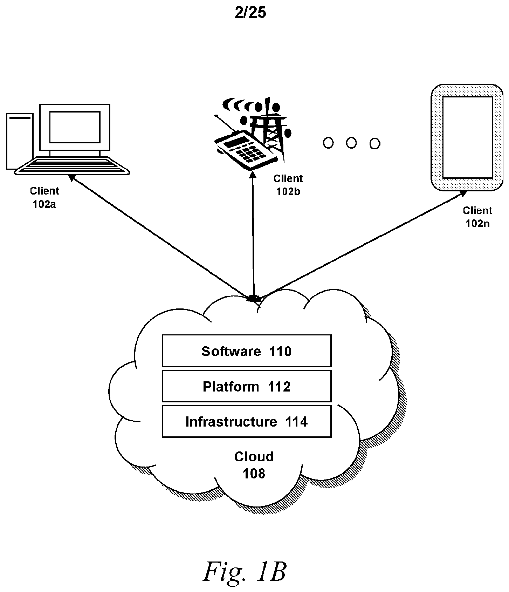

Referring to Fig. 1B, a cloud computing environment is depicted. The cloud computing environment can be part of the computing and network environment 10. A cloud computing environment may provide client 102 with one or more resources provided by the computing and network environment 10. The cloud computing environment may include one or more clients 102a-102n, in communication with the cloud 108 over one or more networks 104. Clients 102 may include, e.g., thick clients, thin clients, and zero clients. A thick client may provide at least some functionality even when disconnected from the cloud 108 or servers 106. A thin client or a zero client may depend on the connection to the cloud 108 or server 106 to provide functionality. A zero client may depend on the cloud 108 or other networks 104 or servers 106 to retrieve operating system data for the client device. The cloud 108 may include back end platforms, e.g., servers 106, storage, server farms or data centers.

The cloud 108 may be public, private, or hybrid. Public clouds may include public servers 106 that are maintained by third parties to the clients 102 or the owners of the clients. The servers 106 may be located off-site in remote geographical locations as disclosed above or otherwise. Public clouds may be connected to the servers 106 over a public network. Private clouds may include private servers 106 that are physically maintained by clients 102 or owners of clients. Private clouds may be connected to the servers 106 over a private network 104. Hybrid clouds 108 may include both the private and public networks 104 and servers 106.

The cloud 108 may also include a cloud based delivery, e.g. Software as a Service (SaaS) 110, Platform as a Service (PaaS) 112, and Infrastructure as a Service (IaaS) 114. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 102 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP, and may use Representational State Transfer (REST) protocol or Simple Object Access Protocol (SOAP). Clients 102 may access PaaS resources with different PaaS interfaces. Some PaaS interfaces use HTTP packages, standard Java APIs, JavaMail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 102 may access SaaS resources through the use of web-based user interfaces, provided by a web browser (e.g. GOOGLE CHROME, Microsoft INTERNET EXPLORER, or Mozilla Firefox provided by Mozilla Foundation of Mountain View, California). Clients 102 may also access SaaS resources through smartphone or tablet applications, including, for example, Salesforce Sales Cloud, or Google Drive app. Clients 102 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

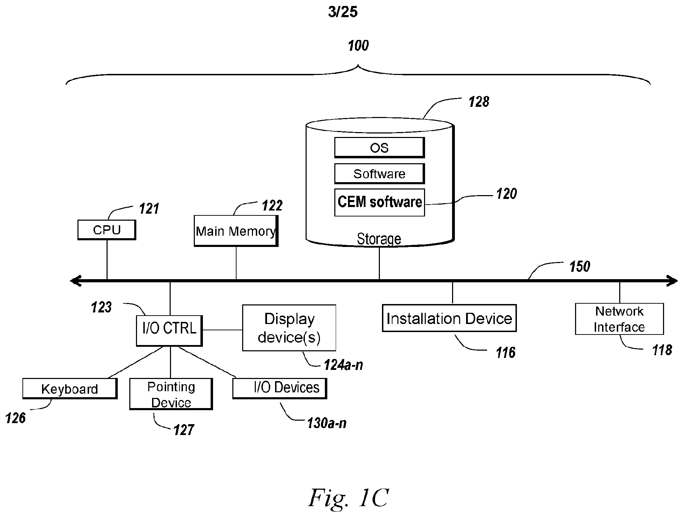

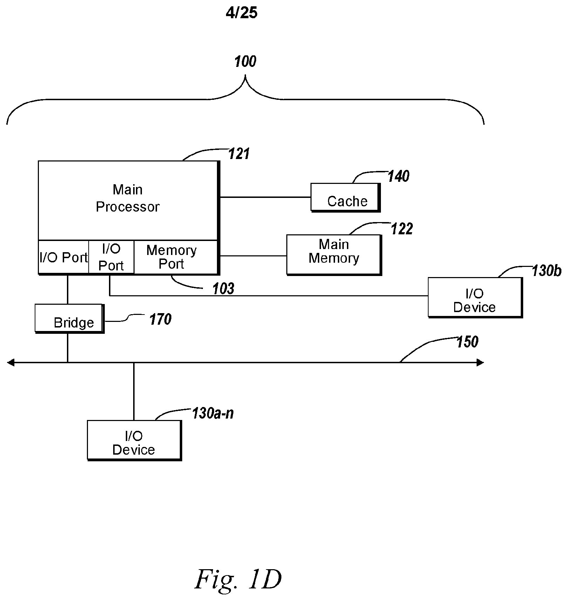

The client 102 and server 106 may be deployed as and/or executed on any type and form of computing device, e.g. a computer, network device or appliance capable of communicating on any type and form of network and performing the operations described herein. FIGS. 1C and 1D depict block diagrams of a computing device 100 useful for practicing an embodiment of the client 102 or a server 106. As shown in FIGS. 1C and 1D, each computing device 100 includes a central processing unit 121, and a main memory unit 122. As shown in FIG. 1C, a computing device 100 may include a storage device 128, an installation device 116, a network interface 118, an I/O controller 123, display devices 124a-124n, a keyboard 126 and a pointing device 127, e.g. a mouse. The storage device 128 may include, without limitation, an operating system, a computer environment monitoring (CNM) software 120, and/or other software, among others. As shown in FIG. 1D, each computing device 100 may also include additional optional elements, e.g. a memory port 103, a bridge 170, one or more input/output devices 130a-130n (generally referred to using reference numeral 130), and a cache memory 140 in communication with the central processing unit 121.

The central processing unit 121 is any logic circuitry that responds to and processes instructions fetched from the main memory unit 122. In many embodiments, the central processing unit 121 is provided by a microprocessor unit, e.g.: those manufactured by Intel Corporation of Mountain View, California; those manufactured by Motorola Corporation of Schaumburg, Illinois; the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. The computing device 100 may be based on any of these processors, or any other processor capable of operating as described herein. The central processing unit 121 may utilize instruction level parallelism, thread level parallelism, different levels of cache, and multi-core processors. A multi-core processor may include two or more processing units on a single computing component. Examples of a multi-core processors include the AMD PHENOM IIX2, INTEL CORE i5 and INTEL CORE i7.

Main memory unit 122 may include one or more memory chips capable of storing data and allowing any storage location to be directly accessed by the microprocessor 121. Main memory unit 122 may be volatile and faster than storage 128 memory. Main memory units 122 may be Dynamic random access memory (DRAM) or any variants, including static random access memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, the main memory 122 or the storage 128 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. The main memory 122 may be based on any of the above described memory chips, or any other available memory chips capable of operating as described herein. In the embodiment shown in FIG. 1C, the processor 121 communicates with main memory 122 via a system bus 150 (described in more detail below). FIG. 1D depicts an embodiment of a computing device 100 in which the processor communicates directly with main memory 122 via a memory port 103. For example, in FIG. 1D the main memory 122 may be DRDRAM.

FIG. 1D depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory 122 and is typically provided by SRAM, BSRAM, or EDRAM. In the embodiment shown in FIG. 1D, the processor 121 communicates with various I/O devices 130 via a local system bus 150. Various buses may be used to connect the central processing unit 121 to any of the I/O devices 130, including a PCI bus, a PCI-X bus, or a PCI-Express bus, or a NuBus. For embodiments in which the I/O device is a video display 124, the processor 121 may use an Advanced Graphics Port (AGP) to communicate with the display 124 or the I/O controller 123 for the display 124. FIG. 1D depicts an embodiment of a computer 100 in which the main processor 121 communicates directly with I/O device 130b or other processors 121' via HYPERTRANSPORT, RAPIDIO, or INFINIBAND communications technology. FIG. 1D also depicts an embodiment in which local busses and direct communication are mixed: the processor 121 communicates with I/O device 130a using a local interconnect bus while communicating with I/O device 130b directly.

A wide variety of I/O devices 130a-130n may be present in the computing device 100. Input devices may include keyboards, mice, trackpads, trackballs, touchpads, touch mice, multi-touch touchpads and touch mice, microphones, multi-array microphones, drawing tablets, cameras, single-lens reflex camera (SLR), digital SLR (DSLR), CMOS sensors, accelerometers, infrared optical sensors, pressure sensors, magnetometer sensors, angular rate sensors, depth sensors, proximity sensors, ambient light sensors, gyroscopic sensors, or other sensors. Output devices may include video displays, graphical displays, speakers, headphones, inkjet printers, laser printers, and 3D printers.

Devices 130a-130n may include a combination of multiple input or output devices, including, e.g., Microsoft KINECT, Nintendo Wiimote for the WII, Nintendo WII U GAMEPAD, or Apple IPHONE. Some devices 130a-130n allow gesture recognition inputs through combining some of the inputs and outputs. Some devices 130a-130n provides for facial recognition which may be utilized as an input for different purposes including authentication and other commands. Some devices 130a-130n provides for voice recognition and inputs, including, e.g., Microsoft KINECT, SIRI for IPHONE by Apple, Google Now or Google Voice Search.

Additional devices 130a-130n have both input and output capabilities, including, e.g., haptic feedback devices, touchscreen displays, or multi-touch displays. Touchscreen, multi-touch displays, touchpads, touch mice, or other touch sensing devices may use different technologies to sense touch, including, e.g., capacitive, surface capacitive, projected capacitive touch (PCT), in-cell capacitive, resistive, infrared, waveguide, dispersive signal touch (DST), in-cell optical, surface acoustic wave (SAW), bending wave touch (BWT), or force-based sensing technologies. Some multi-touch devices may allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, may have larger surfaces, such as on a table-top or on a wall, and may also interact with other electronic devices. Some I/O devices 130a-130n, display devices 124a-124n or group of devices may be augment reality devices. The I/O devices may be controlled by an I/O controller 123 as shown in FIG. 1C. The I/O controller may control one or more I/O devices, such as, e.g., a keyboard 126 and a pointing device 127, e.g., a mouse or optical pen. Furthermore, an I/O device may also provide storage and/or an installation medium 116 for the computing device 100. In still other embodiments, the computing device 100 may provide USB connections (not shown) to receive handheld USB storage devices. In further embodiments, an I/O device 130 may be a bridge between the system bus 150 and an external communication bus, e.g. a USB bus, a SCSI bus, a FireWire bus, an Ethernet bus, a Gigabit Ethernet bus, a Fibre Channel bus, or a Thunderbolt bus.

In some embodiments, display devices 124a-124n may be connected to I/O controller 123. Display devices may include, e.g., liquid crystal displays (LCD), thin film transistor LCD (TFT-LCD), blue phase LCD, electronic papers (e-ink) displays, flexile displays, light emitting diode displays (LED), digital light processing (DLP) displays, liquid crystal on silicon (LCOS) displays, organic light-emitting diode (OLED) displays, active-matrix organic light-emitting diode (AMOLED) displays, liquid crystal laser displays, time-multiplexed optical shutter (TMOS) displays, or 3D displays. Examples of 3D displays may use, e.g. stereoscopy, polarization filters, active shutters, or auto stereoscopy. Display devices 124a-124n may also be a head-mounted display (HMD). In some embodiments, display devices 124a-124n or the corresponding I/O controllers 123 may be controlled through or have hardware support for OPENGL or DIRECTX API or other graphics libraries.

In some embodiments, the computing device 100 may include or connect to multiple display devices 124a-124n, which each may be of the same or different type and/or form. As such, any of the I/O devices 130a-130n and/or the I/O controller 123 may include any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one embodiment, a video adapter may include multiple connectors to interface to multiple display devices 124a-124n. In other embodiments, the computing device 100 may include multiple video adapters, with each video adapter connected to one or more of the display devices 124a-124n. In some embodiments, any portion of the operating system of the computing device 100 may be configured for using multiple displays 124a-124n. In other embodiments, one or more of the display devices 124a-124n may be provided by one or more other computing devices 100a or 100b connected to the computing device 100, via the network 104. In some embodiments software may be designed and constructed to use another computer's display device as a second display device 124a for the computing device 100. For example, in one embodiment, an Apple iPad may connect to a computing device 100 and use the display of the device 100 as an additional display screen that may be used as an extended desktop. One ordinarily skilled in the art will recognize and appreciate the various ways and embodiments that a computing device 100 may be configured to have multiple display devices 124a-124n.

Referring again to FIG. 1C, the computing device 100 may comprise a storage device 128 (e.g. one or more hard disk drives or redundant arrays of independent disks) for storing an operating system or other related software, and for storing application software programs such as any program related to the CEM software 120. Examples of storage device 128 include, e.g., hard disk drive (HDD); optical drive including CD drive, DVD drive, or BLU-RAY drive; solid-state drive (SSD); USB flash drive; or any other device suitable for storing data. Some storage devices may include multiple volatile and non-volatile memories, including, e.g., solid state hybrid drives that combine hard disks with solid state cache. Some storage device 128 may be non-volatile, mutable, or read-only. Some storage device 128 may be internal and connect to the computing device 100 via a bus 150. Some storage device 128 may be external and connect to the computing device 100 via a I/O device 130 that provides an external bus. Some storage device 128 may connect to the computing device 100 via the network interface 118 over a network 104, including, e.g., the Remote Disk for MACBOOK AIR by Apple. Some client devices 100 may not require a non-volatile storage device 128 and may be thin clients or zero clients 102. Some storage device 128 may also be used as an installation device 116, and may be suitable for installing software and programs. Additionally, the operating system and the software can be run from a bootable medium, for example, a bootable CD, e.g. KNOPPIX, a bootable CD for GNU/Linux that is available as a GNU/Linux distribution from knoppix.net.

Client device 100 may also install software or application from an application distribution platform. Examples of application distribution platforms include the App Store for iOS provided by Apple, Inc., the Mac App Store provided by Apple, Inc., GOOGLE PLAY for Android OS provided by Google Inc., Chrome Webstore for CHROME OS provided by Google Inc., and Amazon Appstore for Android OS and KINDLE FIRE provided by Amazon.com, Inc. An application distribution platform may facilitate installation of software on a client device 102. An application distribution platform may include a repository of applications on a server 106 or a cloud 108, which the clients 102a-102n may access over a network 104. An application distribution platform may include application developed and provided by various developers. A user of a client device 102 may select, purchase and/or download an application via the application distribution platform.

Furthermore, the computing device 100 may include a network interface 118 to interface to the network 104 through a variety of connections including, but not limited to, standard telephone lines LAN or WAN links (*e.g*., 802.11, T1, T3, Gigabit Ethernet, Infiniband), broadband connections (e.g., ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). In one embodiment, the computing device 100 communicates with other computing devices 100' via any type and/or form of gateway or tunneling protocol e.g. Secure Socket Layer (SSL) or Transport Layer Security (TLS), or the Citrix Gateway Protocol manufactured by Citrix Systems, Inc. of Ft. Lauderdale, Florida. The network interface 118 may comprise a built-in network adapter, network interface card, PCMCIA network card, EXPRESSCARD network card, card bus network adapter, wireless network adapter, USB network adapter, modem or any other device suitable for interfacing the computing device 100 to any type of network capable of communication and performing the operations described herein.

A computing device 100 of the sort depicted in FIGS. 1B and 1C may operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 2000, WINDOWS Server 2012, WINDOWS CE, WINDOWS Phone, WINDOWS XP, WINDOWS VISTA, and WINDOWS 7, WINDOWS RT, and WINDOWS 8 all of which are manufactured by Microsoft Corporation of Redmond, Washington; MAC OS and iOS, manufactured by Apple, Inc. of Cupertino, California; and Linux, a freely-available operating system, e.g. Linux Mint distribution ("distro") or Ubuntu, distributed by Canonical Ltd. of London, United Kingdom; or Unix or other Unix-like derivative operating systems; and Android, designed by Google, of Mountain View, California, among others. Some operating systems, including, e.g., the CHROME OS by Google, may be used on zero clients or thin clients, including, e.g., CHROMEBOOKS.

The computer system 100 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. The computer system 100 has sufficient processor power and memory capacity to perform the operations described herein. In some embodiments, the computing device 100 may have different processors, operating systems, and input devices consistent with the device. The Samsung GALAXY smartphones, e.g., operate under the control of Android operating system developed by Google, Inc. GALAXY smartphones receive input via a touch interface.

In some embodiments, the computing device 100 is a gaming system. For example, the computer system 100 may comprise a PLAYSTATION 3, or PERSONAL PLAYSTATION PORTABLE (PSP), or a PLAYSTATION VITA device manufactured by the Sony Corporation of Tokyo, Japan, a NINTENDO DS, NINTENDO 3DS, NINTENDO WII, or a NINTENDO WII U device manufactured by Nintendo Co., Ltd., of Kyoto, Japan, an XBOX 360 device manufactured by the Microsoft Corporation of Redmond, Washington.

In some embodiments, the computing device 100 is a digital audio player such as the Apple IPOD, IPOD Touch, and IPOD NANO lines of devices, manufactured by Apple Computer of Cupertino, California. Some digital audio players may have other functionality, including, e.g., a gaming system or any functionality made available by an application from a digital application distribution platform. For example, the IPOD Touch may access the Apple App Store. In some embodiments, the computing device 100 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, the computing device 100 is a tablet e.g. the IPAD line of devices by Apple; GALAXY TAB family of devices by Samsung; or KINDLE FIRE, by Amazon.com, Inc. of Seattle, Washington. In other embodiments, the computing device 100 is a eBook reader, e.g. the KINDLE family of devices by Amazon.com, or NOOK family of devices by Barnes & Noble, Inc. of New York City, New York.

In some embodiments, the communications device 102 includes a combination of devices, e.g. a smartphone combined with a digital audio player or portable media player. For example, one of these embodiments is a smartphone, e.g. the IPHONE family of smartphones manufactured by Apple, Inc.; a Samsung GALAXY family of smartphones manufactured by Samsung, Inc.; or a Motorola DROID family of smartphones. In yet another embodiment, the communications device 102 is a laptop or desktop computer equipped with a web browser and a microphone and speaker system, e.g. a telephony headset. In these embodiments, the communications devices 102 are web-enabled and can receive and initiate phone calls. In some embodiments, a laptop or desktop computer is also equipped with a webcam or other video capture device that enables video chat and video call.

In some embodiments, the status of one or more machines 102, 106 in the network 104 is monitored, generally as part of network management. In one of these embodiments, the status of a machine may include an identification of load information (e.g., the number of processes on the machine, central processing unit (CPU) and memory utilization), of port information (e.g., the number of available communication ports and the port addresses), or of session status (e.g., the duration and type of processes, and whether a process is active or idle). In another of these embodiments, this information may be identified by a plurality of metrics, and the plurality of metrics can be applied at least in part towards decisions in load distribution, network traffic management, and network failure recovery as well as any aspects of operations of the present solution described herein. Aspects of the operating environments and components described above will become apparent in the context of the systems and methods disclosed herein.

### B. Monitoring Solution Stacks or Subsystems of a Computer Ecosystem

The present disclosure relates to systems and methods for monitoring solution stacks, computer subsystems or assets thereof in a computer environment, such as the computing and network environment 10. Specifically, the current disclosure relates to intelligent generating and rendering of monitoring data of the computer environment, a solution stack, a computer subsystem or assets thereof. A computer environment is also referred to herein as a computer ecosystem. A solution stack as used herein can refer to a bundle of software components and/or hardware subsystems or devices associated with a corresponding solution, also referred to in some implementations as information technology (IT) solution. As used herein, an asset of the computer environment can be a software asset, a hardware asset, a data asset, a user or individual associated with the computer environment or a solution thereof, or a combination thereof. A software asset can include, for example, a software subsystem, a software server, a software code, a software component, or a script, among others. A hardware asset can include a hardware server, a client computing device, a storage device, a network device, a power device or system, a microprocessor, a microchip, a printed circuit board, a controller, a circuitry, a sensor, a camera, or other electric, electronic or electromechanical device, among others. A data asset can include a database, a data folder, a data file, a data structure or a combination thereof.

A solution can refer to a function to be performed, for example, within the computer environment/ecosystem. The solution can be a software solution, e.g., a function performed through software executing on one or more computing devices, a hardware-based solution or a combination thereof. In general, a solution stack can be viewed as the set of assets configured to provide a reliable and fully functioning corresponding solution. For instance, the solution stack can form a complete system or platform to provide the reliable and fully functioning corresponding solution. Solution stacks and corresponding solutions may be used, or referred to, herein interchangeably. Illustrative examples of solutions can include an enterprise email service such as MICRSOFT EXCHANGE, an instant messaging and/or a voice-over-IP (VOIP) service such as SKYPE for Business, a teleconferencing service, a document management service, a computerized accounting service, an electric power solution, for example, for a given enterprise office or site, a storage solution, a virtualization solution, a network solution, or a combination thereof, among others.

The software bundle for a corresponding solution can be sold as a single software package. A vendor may either sell only the software package or sell both the software package and the corresponding supporting and/or hosting hardware for a given solution. However, even when selling only the software package, the vendor may still provide specifications of the hardware infrastructure, such as the type and number of hardware assets, and/or the corresponding architecture (e.g., how the hardware assets are interconnected) specified or preferred to run and support the software bundle. The vendor may provide specified or preferred configuration settings or other settings for various assets of the solution stack, including hardware and/or software assets, or for the solution stack as a whole.

When a solution stack for a corresponding solution is built or integrated, for example, within a computer environment such as an enterprise computer network, the integration or building of the solution stack may not conform with specifications or requirements provided by the corresponding vendor. For example, the owner of the computer environment or the respective IT personnel may use a different hardware infrastructure, (e.g., in terms of the number, types or capabilities of computer servers or other devices used), different architecture (e.g., in terms of inter-connections between various assets) and/or different settings (e.g., configuration settings) than those specified or recommended by the vendor. Also, even if the solution stack is initially built, installed or integrated in compliance with the vendor's specifications or recommendations, intentional or inadvertent modifications of the solution stack may occur after the installation or deployment of the solution stack. For example, an IT administrator may intentionally or inadvertently add, remove or omit an asset of the solution stack, add, remove omit a physical or logical connection between two or more assets in the solution stack, or change a configuration setting or other setting for one or more assets of the solution stack, among others. Also, an asset or a subsystem (e.g., a firewall or a cybersecurity system among others) of the computer environment may automatically affect similar changes to the solution stack, for example, by quarantining an asset or modifying a setting parameter of an asset.

Changes or modifications to the solution stack made prior to, during or after deployment of the solution stack can negatively affect or jeopardize the functioning, performance, security, compliance, risk, and/or operational health, among others, of the corresponding solution. The changes or modifications to the solution stack can negatively affect or jeopardize the functioning, performance, security, compliance, risk, and/or operational health, among others, of another solution, another subsystem or another asset of the computer environment, or of the whole computer environment. For example, if the vendor specifications recommend or suggest hosting backend and frontend databases of a solution on separate servers, deploying or modifying the solution stack to host such databases on the same server can lead to a cybersecurity risk that can jeopardizing the security, availability and/or credibility of data stored in the backend database. For example, an intrusion of the server can expose both the frontend and backend databases. Also, reducing, e.g., at the deployment phase or after deployment of the solution stack, the number of servers recommended for the solution can cause performance, operational, compliance and/or security issues associated with the solution stack or other components of the computer environment. For instance, using a smaller number of servers (e.g., smaller than a number of servers specified by the vendor) can result in higher than planned processing load on the deployed servers or in mitigated or nullified redundancy. Overloading the deployed servers can reduce the respective processing speed and/or increase the number or rate of dropped tasks, while mitigating or nullifying redundancy can increase the likelihood of total failure of the solution. As another example, deployments of, or modifications to, a solution stack that violate a requirement or specification of not assigning a separate externally facing Internet Protocol (IP) address and a separate internally facing IP address to the same server can result in creating a cybersecurity hole, which can result in a backdoor that facilitates bypassing a firewall of the computer environment or other cybersecurity system. Such violation can occur, for example, in a deployed Skype^{™} edge server. Another example problem may occur when a firewall configuration wrongly indicates that a server, or asset, of the solution is meant or intended to communicate internally. In such example, the firewall can block, lock down or quarantine the server (or asset) and prevent it from communicating with an external entity (e.g., outside the computer environment), which can bring the whole solution or one or more functions thereof down.

The changes or modifications to any solution stack can occur at any point of time during or after deployment. As such, monitoring deployed solution stacks can help diagnose and overcome, or quickly address, technical problems or risks associated with inadequate builds or configurations, e.g., compared to reference solution profiles or specifications, of the solution stack or related assets. Specifically, monitoring a current state of a given solution stack can allow for detecting and addressing functional, performance, operational, compliance or security problems associated with the solution stack. The current state of the solution stack can include information indicative of the assets forming the solution stack, the configuration settings of the assets, the infrastructure interconnections between the assets, and/or the security-wise inter-relations between the assets, among others, at a current point of time. A CEM system can compare the current state to a reference or desired state of the solution stack to allow for correcting, or eliminating, any discrepancies between both states whenever desired, for example, to avoid or address any problems related to such discrepancies. In general, the CEM system can monitor a computer ecosystem or respective solution stacks, subsystems and/or assets.

The CEM system can include, for example, the CEM software 120 and one or more computing devices for executing the CEM software 120. The one or more computing devices can be part of, or communicatively connected to, the computer ecosystem or subsystems or solutions thereof. Upon detecting an architectural, configuration, operational, security or compliance problem (e.g., a solution stack is hosting frontend and backend databases on the same server) associated with a solution stack, subsystem or asset, the CEM system can alert one or more users, e.g., system administrators. When made aware of such problem, a system administrator can take proper steps to fix an inadequate build, deployment or configuration or fix a security or compliance issue.

Real time or near real-time (e.g., iteratively every few minutes) monitoring of the assets, architecture, and/or configuration of a deployed solution sack or subsystem can allow for continuous assessment of the performance health, the security health and/or the compliance to relevant regulations, among other aspects of the solution or the subsystem. The performance health can be defined, for example, based on usage or availability of processing resources, memory or storage resources, network resources or power resources, among other resources. The security health can be defined based on, or can be indicative of, vulnerabilities, security holes, or security risks, among others issues. The compliance of the solution stack can include compliance to business or legal regulations and/or rules, among others. Also, monitoring of the performance health, the security health and/or the compliance to relevant regulations and/or rules can help identify any effects the deployed solution stack or subsystem may have on other solution stacks, other subsystems or other assets of the computer environment. In many practical cases, monitoring separate solutions stacks, separate subsystems or relatively more important (e.g., from a business perspective or risk perspective) solution stacks or subsystems can be more efficient, more reliable and more productive than monitoring the whole computer environment. Also, monitoring separate solutions stacks or subsystems can allow for relatively quick and efficient responses to cybersecurity threats or attacks or other problems, for example, compared to monitoring the whole computer environment.

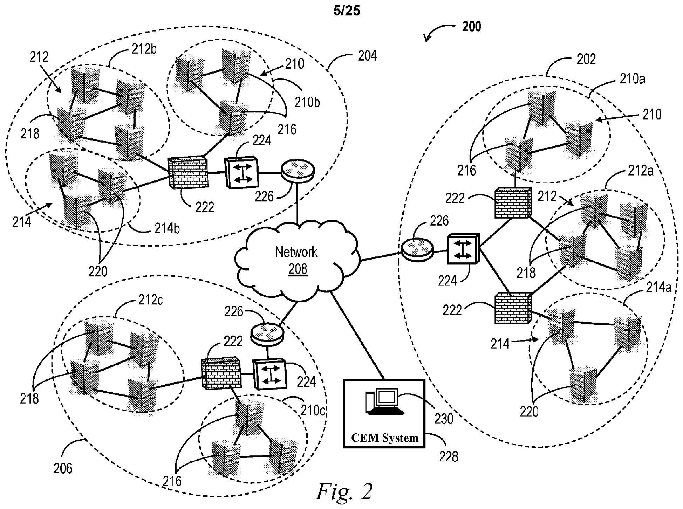

Referring to FIG. 2, an example computer environment 200 hosting a plurality of IT solutions is depicted. The computer environment 200 can be, or can include, an enterprise or corporate computer network, a communication network, a power grid system, a network of remotely monitored or controlled medical devices, or a combination thereof, among others. The communication network can include a cellular network, landline network, optical network, metropolitan area network (MAN), or wide area network (WAN), among other networks. The computer environment 200 can be distributed over, or can include, a plurality of sites 202-206, for example, associated with distinct geolocations. The sites 202, 204 and 206 can be communicatively coupled or connected to each other through a communication network 208. The communications network 208 can include a local-area network (LAN), e.g. Intranet, a metropolitan area network (MAN), a wide area network (WAN), a wireless network, a private network, a public network, the Internet, or a combination thereof. A site, e.g., 202, 204 or 206, can include or can be a local computer sub-environment or network associated, for example, with a corporate office or industrial factory or site. A site, e.g., 202, 204 or 206, can be associated with a data center, for example, hosting a portion of the computer environment deployed in the cloud.

The computer environment 200 can include a plurality of solution stacks 210, 212 and 214 integrated or deployed therein. Each solution stack can be associated with, e.g., configured to provide, a corresponding solution. Each of the solution stacks 210, 212 and 214 can be distributed over one or more of the sites 202, 204 and 206. For example, solution stack 210 can include sub-stacks 210a, 210b and 210c arranged at sites 202, 204 and 206, respectively. Solution stack 212 can include sub-stacks 212a, 212b and 212c arranged at sites 202, 204 and 206, respectively. Solution stack 214 can include sub-stacks 214a and 214b arranged at sites 202 and 204, respectively. For any of the solution stacks 210, 212 or 214, each of (or at least one of) the corresponding sub-stacks can represent a full solution stack. For example, the corresponding sub-stacks can be clones or copies of each other. In some implementations, the sub-stacks for any of the solution stacks 210, 212 or 214 can form a full solution stack in combination. Each solution stack 210, 212 or 214 can include a corresponding plurality of assets. For example, solution stack 210 can include a plurality of assets 216, solution stack 212 can include a plurality of assets 218, and solution stack 214 can include a plurality of assets 220. For each solution stack 210, 212 or 214, the corresponding assets can include hardware assets, software assets or a combination of both.

Each of the sites 202, 204 and 206 can include one or more firewalls 222, one or more switches 224, one or more routers 226, other computer or electronic devices (not shown in FIG. 2), or a combination thereof. The other computer or electronic devices may or may not be part of solution stacks 210, 212 and 214. Any of the solution stacks 210, 212 and 214, or an asset thereof, can be communicatively coupled to the one or more firewalls 222, the one or more switches 224 and/or the one or more routers 226. For example, at each site 202, 204 or 206 the corresponding firewall(s) 222 can monitor and control communications between a solution sub-stack in that site with other solution sub-stacks, other computer sub-systems and/or other assets in that site. The firewall 222 at a given site 202, 204 or 206 can monitor and control communications with entities outside the site. In some implementations, the firewall 22, the switches 224 and/or the routers 226 can be part of the solution stacks 210, 212 and/or 214.

Distinct solution stacks or distinct solution sub-stacks, e.g., associated with distinct solutions, may share one or more assets. For example, a firewall 222 can be part of two distinct solution stacks or distinct solution sub-stacks. While FIG. 2 provides an example illustration of solution stacks, e.g., solution stacks 210, 212 and 214, integrated in a computer environment 200, such illustration is not limiting, for example, with respect to the number of solution stacks in computer environment 200, the distribution of a solution stack among one or more sites, the number of assets in each solution stack, the interconnection between assets within a given solution stack, the connections between any solution stack and other assets of the computer environment 200, among others.

A solution, or a corresponding solution stack, can include one or more assets, one or more sub-solutions, or a combination thereof. A sub-solution can be viewed as a relatively small solution embedded within another larger solution. A sub-solution can include corresponding assets, but may not include other solutions or sub-solutions. A solution can include assets, sub-solutions, other solutions or a combination thereof. For example, one or more domain controllers can form a sub-solution for handling security authentication requests. SKYPE for Business is an example of a solution that includes a security authentication sub-solution, e.g., one or more domain controllers, and one or more other assets.

A super solution can include a plurality of solutions. In some implementations, a super solution can be a group of solutions. Two or more solutions of the group of solutions can share one or more assets. An example of a super solution can be a unified communication system including the solutions SKYPE for Business, MICROSOFT EXCHANGE, and a teleconferencing system can be viewed as a super solution. A super solution can be monitored or assessed as one entity. In some implementations, the computer environment 200 can include one or more super solutions, one or more solutions, one or more sub-solutions or a combination thereof.

The solution stacks 210, 212 and/or 214 can be defined within one layer or level, or across a plurality of layers or levels. For instance, the solution stacks 210, 212 and/or 214 can be defined at the servers' level, at the virtualization layer, at the network layer or level, or at the application layer, among others. For example, a solution that is implemented using virtual machines can be defined in terms of such virtual machines and corresponding virtualization host(s). In some implementations, the solution stacks 210, 212 and/or 214 can be defined across all layers or levels, for example, from the application layer all the way down to the electrical or physical layer. In such implementations, the solution stacks 210, 212 and/or 214 can include a combination of software assets, computing devices, network devices, and power supply devices, among others assets associated with various layers or levels. When considering all layers or levels, the solution stack can be defined as a complete set of software and/or hardware assets involved in performing the corresponding solution or the function(s) associated with the solution.

The computer environment 200 can include, or can be communicatively coupled to, a computer environment monitoring (CEM) system 228. The CEM system 228 can include one or more computing devices 230 for executing the CEM software 120 described with respect to FIG. 1C. The one or more computing devices 230 can be similar to the computing device 100 of FIG. 1C. In some implementations, the one or more computing devices 230 of the CEM system 228, or a subset thereof, can be arranged at one of the sites 202, 204 or 206. The CEM system 228 can include a computing device 230 located at a remote location from all sites 202, 204 and 206. The CEM system 228 can be configured to perform methods described in this disclosure.

The computing device 100 depicted in, and described in with regard to, FIGS. 1C and 1D can represent the architecture of the CEM system 228, devices thereof, or other devices of the computer ecosystem 200. The servers 106 shown in FIG. 1A can represent servers of the computer ecosystem 200. Some of the hardware, software and/or data assets of the computer ecosystem 200 can be located in the cloud 108, as shown in FIG. 1B. The client devices 102 shown in FIGS. 1A and 1B can represent client devices of the computer ecosystem 200 or client devices accessing the computer ecosystem 200. As used herein, a subsystem of the computer ecosystem 200 can include one or more solution stacks, a portion of a solution stack or a subset of the assets (e.g., associated with a geolocation, a manufacturer or vendor, an asset type, or an operating system, among others) of the computer ecosystem 200.

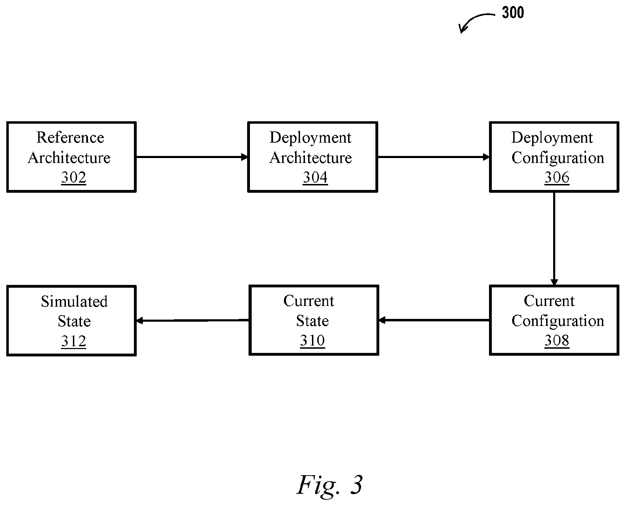

Referring to FIG. 3, a block diagram illustrating various phases, states or aspects 300 of a solution or a subsystem is shown. The various phases, states or aspects 300 can include a reference architecture 302, a deployment architecture 304, a deployment configuration 306, a current configuration 308, a current state 310, and/or a simulated state 312. These phases, states or aspects may not be all available for each solution. For instance, only a subset of these phases, states or aspects 300 can be available. The various phases, states or aspects 300 can be associated with distinct stages of a lifecycle of the solution or the respective solution stack.

The reference architecture 302 can represent a recommended or desired architecture, for example, provided or specified by a vendor or an architect of the solution or the subsystem. The reference architecture can specify, for example, the hardware and software assets to form the solution or the subsystem, the interconnections between various assets, the hardware host(s) for each software asset, or a combination thereof. The reference architecture 302 can specify, or can include, one or more configuration settings for one or more assets of the solution stack or subsystem or other assets of the computer environment 200 in which the solution stack or subsystem is to be integrated. The reference architecture 302 may specify one or more requirements or parameters related to, for example, high availability, disaster recovery, business continuity, operational recovery, resiliency, or a combination thereof, among others. Information indicative of, or associated with, the reference architecture 302 can be provided as input to the CEM system 228, or obtained from a database or asset of the computer environment 200.

The deployment architecture 304 can represent an architecture of the solution stack or subsystem as initially deployed or integrated in the computer environment 200. The deployment architecture 304 may or may not be in conformity with the reference architecture 302. For example, as discussed above, the solution or solution stack or subsystem may be deployed with less or more hardware assets, or with assets having different capabilities than those specified in the reference architecture 302. According to another example, the solution stack or subsystem may be deployed with interconnections between various assets, or respective ports, that are different than the interconnections specified in the reference architecture 302. According to yet another example, one or more software assets, e.g., including databases, may be hosted on hardware assets different than those specified in the reference architecture 302. Information indicative of, or associated with, the deployment architecture 304 can be provided as input to the CEM system 228, or can be obtained from a database or asset of the computer environment 200.

The deployment configuration 306 can include, or can be indicative of, configuration settings for one or more assets of the solution stack or subsystem that are adopted at the time when the solution stack or subsystem is initially deployed within the computer environment 200. Similar to the deployment architecture 304, the deployment architecture 306 may not conform with configuration settings specified in the reference architecture 302. Also, the deployment configuration 306 may or may not conform, for example, with security specifications, compliance specifications, or other specifications associated with the solution stack, or the computer environment 200. The security specifications, compliance specification, or other specifications can be listed or described as part of the reference architecture 302 or otherwise provided by a vendor of the solution or through an online resource or database. Discrepancies between deployment configuration 306 and other settings or specifications, e.g., related to the solution stack or the computer environment 200, can occur as a matter of choice or by mistake on the part of the person deploying the solution or corresponding solution stack. The CEM system 228 can obtain information indicative of, or associated with, the deployment configuration 306, for example, from configuration logs associated with the solution stack or assets thereof, from a database or other data source associated with the solution stack or the computer environment 200, or as input data, among others.

The current configuration 308 can include, or can be indicative of, the configuration settings of the solution stack or one or more assets thereof at a current time instant post deployment. After deployment of the solution or solution stack or subsystem, a user or an asset of the computer environment 200, such as firewall 222 or a computer server, among others, can modify the configuration settings adopted at the time of deployment. For example, a system administrator may intentionally or inadvertently modify one or more configuration settings associated with one or more assets of the solution stack. An asset of the computer environment 200 may automatically modify one or more configuration settings associated with one or more other assets of the solution stack or subsystem, for example, due to conflict with other configuration settings, such as security or compliance settings, associated with the computer environment 200. The CEM system 228 can obtain information indicative of, or associated with, the current configuration 308, for example, from one or more assets of the solution stack, or configuration logs associated with the solution stack or the computer environment 200, among others.

The current state 310 can represent a current situation of the solution or subsystem from one or more perspectives. For instance, the current state 310 can include information related to, or indicative of, a current architecture of the solution stack or subsystem. The current architecture can include assets currently forming the solution stack or subsystem and corresponding interconnections. The current architecture may be similar to, or different from the deployment architecture 304 and/or the reference architecture 302. The current state 310 can include information related to, or indicative of, the current configuration 308. In some implementations, the current configuration 308 can be part of the current state 310. The current state 310 can include information related to, or indicative of, a current operational state. The current operational state can include, for example, information or parameters indicative of which assets are down, processing performance of one or more assets, networking performance of one or more assets, percentage usage of resources for one or more assets, redundancies, disaster recovery, operational recovery, high availability, operational recovery or a combination thereof, among others. The current state 310 can include information related, or indicative of, a current security state. The current security state can include, for example, information or parameters indicative of current vulnerabilities for one or more assets, resiliency, current security risks at the asset level or the solution stack level, or a combination thereof, among others.

The CEM system 228 can obtain information indicative of, or associated with, the current state 310 from one or more data sources, such as vulnerability scanners, assets of the solution stack, subsystem or the computer environment 200, logs of the solution stack, subsystem or the computer environment 200, databases or online information resources (e.g., websites, webpages or client application pages) of vendors of the solution or assets thereof, or a combination thereof. For example, the CEM system 220 can profile, or cause another system or device to profile, one or more assets of the solution stack, the subsystem or of the computer environment 200. The CEM system 228 can compare and/or merge data received from a plurality of data sources. For example, the CEM system 228 can compare data received from various vulnerability scanners with respect to one or more parameters of the solution stack, the subsystem or an asset thereof. The CEM system 228 can profile, or cause the profiling of, one or more assets, for example, to resolve a conflict or inconsistency in data from various vulnerability scanner or other data sources.

The CEM system 228 can analyze information received from the data sources, e.g., a combination of asset communication activity information, communication or configuration logs, physical or logical interconnection data, Internet protocol (IP) addresses, processing power usage data, memory or storage usage data, network resources usage data, and/or power resources usage data, to deduce additional parameters of the current state 210. For example, the CEM system 228 can use communication activity information, communication logs, and/or security zone(s) for one or more assets of the solution stack or subsystem to deduce a parameter value indicative of whether or not the solution stack complies with a security specification (or requirement). According to another example, the CEM system 228 can use information indicative of current architecture and/or descriptions of one or more assets of the solution stack or subsystem to deduce a parameter value indicative of redundancy or of failure risk for the solution stack or subsystem.

he simulated state 312 can represent a state of a simulated scenario of the solution or the subsystem. The CEM system 228 can simulate, or cause simulation of, one or more hypothetical versions of the solution stack or subsystem, for example, in terms of the architecture, configuration or other aspects of the solution stack. The CEM system 228 can define or construct a modified or hypothetical version of the solution stack or subsystem that is, for example, different from the current state 310 of the solution stack or subsystem with respect to one or more aspects or features, and simulate the modified or hypothetical version of the solution stack or subsystem to assess effect of the difference(s) on various assets associated with the solution stack, subsystem or the computer environment 200. For example, if the current state 310 indicates a current problem, e.g., related to the current architecture, current configuration 308, or other aspects of the solution stack or subsystem, the CEM system 228 or a component thereof can simulate a plurality of modifications of the solution stack that can be pursued to fix the problem. The simulations can provide estimates of the effects of each of the possible solution modifications on the solution stack, the computer environment 200, or components thereof. The use of simulations can help avoid or mitigate potential chaotic modifications, and pursue a relatively smooth modification path or scenario. The CEM system 228 can generate a plurality of simulation responses associated with a plurality of potential modifications. Each potential modification to the solution stack can be simulated at one or more layers, e.g., the network layer, storage layer, virtualization layer, electrical layer, or application layer, among others. The CEM system 228 can provide the plurality of simulation responses for display to a user, and the user can select one of the potential modifications to be implemented based on the simulation responses. The CEM system 228 may recommend one of the potential modifications to be implemented based on the simulation responses.

The CEM system 228 can monitor a solution stack or subsystem of the computer ecosystem 200 to assess operational health, security health or other aspects of the solution, the subsystem or respective assets in real-time or near real-time (e.g., periodically every predefined time interval). The CEM system 228 may assess the operational health, security health or other aspects of the solution or subsystem responsive to an assessment request received, for example, from a user of the CEM system 228. The CEM system 228 can assess the solution stack in various domains, such as the service domain, the infrastructure domain, the security domain or a combination thereof, among others.

Referring to FIG. 4, a flowchart illustrating a method 400 of monitoring deployed solution stacks or subsystems of a computer ecosystem is shown, according to example embodiments of the current disclosure. The method 400 can include assessing a solution stack or subsystem in the service domain (STEP 402). The solution stack can be associated with a corresponding solution. The method 400 can include assessing the solution stack in the infrastructure domain (STEP 404). The method 800 can include assessing the solution stack in the security domain (STEP 406). The method 400 can include providing assessment results for display on a display device (STEP 408).

The method 400 can include the CEM system 228 (or a component thereof) assessing the solution stack or subsystem in the service domain (STEP 402). Assessing the solution stack or subsystem in the service domain can include the CEM system 228 checking for availability of one or more services provided by the solution or subsystem. For example, the CEM system 228 can run a script (or software code) to send a request for a given service (or to initiate a session) to the solution or subsystem. The CEM system 228 can check one or more solution responses, if any, to request sent. The solution or subsystem response(s) may include, for example, an acknowledgement of the request or an indication of initiation of the requested service on the part of the solution stack. The response(s) may include a failure or error message. The CEM system 228 can determine availability of the solution (or subsystem) or a service thereof based on, for example, the existence and/or content of responses to service requests. The CEM system 228 can check one or more assets of the solution stack or subsystem to determine whether a specific software (or application) associated with the requested service is executing thereon. The CEM system 228 can profile (e.g., send one or more requests for asset related information) the one or more assets of the solution stack or subsystem for software (or applications) running thereon and check whether the specific software (or application) is among the ones currently executing on the one or more assets. Checking for software (or applications) running on one or more assets of the solution (e.g., after sending the service request) can allow the CEM system 228 to assess whether or not the solution stack, subsystem or assets thereof are showing adequate response to the service request. In some implementations, the CEM system 228 can employ the asset profiling to diagnose the service(s) thereof at one or more granular levels. For instance, in case a service is down, the CEM system 228 can provide a detailed diagnosis of which asset(s) of the solution or subsystem is/are not available (or down).

As part of service domain assessment, the CEM system 228 can determine or estimate a performance metric indicative of, for example, a measure or ranking of the overall performance of the solution. The CEM system 228 can determine or estimate one or more performance metrics for one or more services provided by the solution. The CEM system 228 can determine the performance metric(s) for the solution and/or services thereof based on, for example, number or percentage of successful service requests (sent to the solution stack), the time duration the solution takes to respond to each request or to initiate each service, the number of successful parallel requests or a combination thereof, among others.

The method 800 can include the CEM system 228 (or a component thereof) assessing the solution stack or subsystem in the infrastructure domain (STEP 404). Assessing the solution stack or subsystem in the infrastructure domain can include the CEM system 228 checking for or determining various situational awareness attributes for various assets of the solution or subsystem. For instance, the CEM system 228 can profile one or more assets for central processing unit (CPU) usage, memory usage, network performance (e.g., transmission/reception rate, bandwidth usage, short-term packet loss, etc.), disk space, disk latency or a combination thereof, among others. The CEM system 228 can use weighted aggregations for various assets of the solution with respect to a (or each) situational awareness attribute to determine an overall performance of the solution (or a service thereof) with respect to that attribute. The infrastructure domain assessment can provide a performance assessment at the asset level.

The method 400 can include the CEM system 228 (or a component thereof) assessing the solution stack or subsystem in the security domain (STEP 406). Assessing the solution stack in the security domain can include the CEM system 228 assessing the security of the solution (or subsystem) and/or assets thereof. For instance, the CEM system 228 can check or verify security of one or more communication links, tunnels or communication transactions, data encryption, security configurations of one or more assets, security zones for various assets, vulnerabilities for various assets or a combination thereof, among others. The CEM system 228 can determine an assessment of overall security flaws for the solution, subsystem or services thereof based on these verifications.

The method 400 can include the CEM system 228 (or a component thereof) providing assessment results (or monitoring data) obtained, for example, at any of the steps 402-406 for display on a display device. The CEM system 228 can generate a visual representation of the solution stack or subsystem using the assessment data obtained during any of the steps 402-406. The visual representation may include a two-dimensional (2D) visual representation or a three-dimensional (3D) visual representation. The visual representation can be depict the architecture (e.g., assets, interconnections between assets, interdependencies between assets and/or type of each asset). The visual representation can depict the importance (or relative importance) of each asset with respect to one or more aspects of the assets. The visual representation can be an interactive representation. For instance, the visual representation can cause the display device to display additional information about an asset (e.g., asset type, asset name, asset description, IP address, asset location, configuration settings and/or operating system among others) upon interaction with a depiction (or representation) of the asset. The visual representation may be filtered, for example, to show only assets of a given type or assets satisfying some filtering criterion.

The CEM system 228 can provide various two-dimensional (2D) or three-dimensional (3D) representations of the current architecture of the solution for display on a display device. The 2D and/or 3D representations can illustrate filtered versions of the reconstructed current solution architecture. For example, the 2D and/or 3D representations can depict the current solution architecture per layer, per asset vendor, per geographical area or a combination thereof, among others.

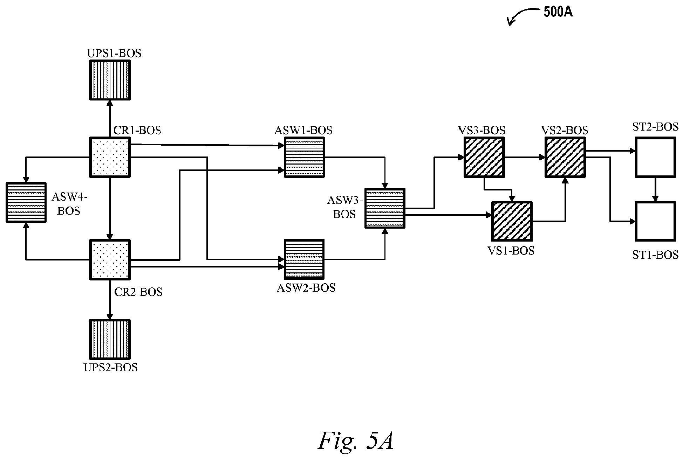

Referring to FIGS. 5A-5D, various 2D visual representations 500A-500D illustrating various architectures associated with a SKYPE for Business solution within a given geographical location (e.g., Boston) are shown. In FIGS. 5A-5D, each square represents a corresponding asset. The lines connecting pairs of assets can represent connections between or interdependencies between the corresponding assts. The term "BOS" refers to the geolocation Boston, "CR" refers to core router, "ASW" refers to access switch, "USP" refers to un-interrupted power supply, which is an electrical apparatus that provides emergency power to a load when the input (or main) power source fails, "VS" refers to virtual server and "ST" refers to storage (or storage device).

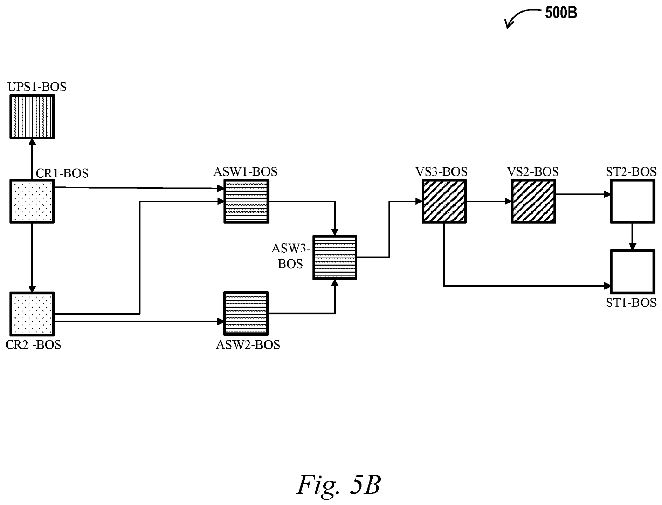

The 2D visual representation 500A in FIG. 5A represents the reference solution architecture, while the 2D visual representation 500B in FIG. 5B represents the current architecture of the solution as currently implemented. Comparing both architectures, one can see that the access switch "ASW4-BOS," the power supply "UPS2-BOS" and the virtual server "VS 1-BOS" are present in the reference solution architecture 500A in FIG. 5A but not in the reconstructed current solution architecture 500B of FIG. 5B. As used herein,

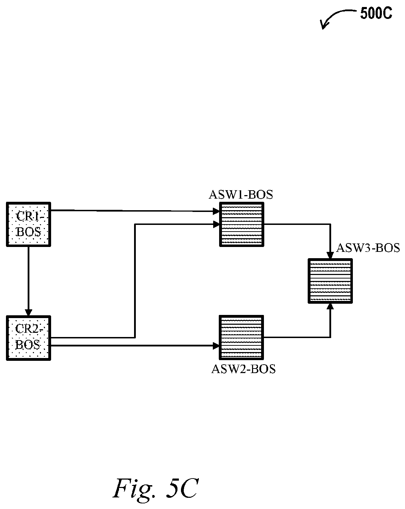

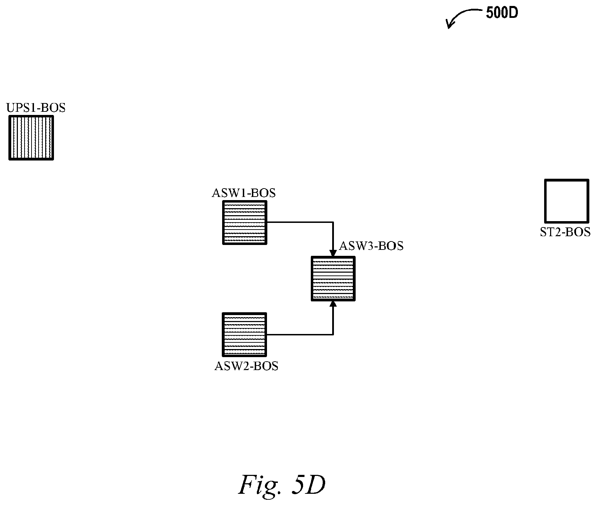

The 2D visual representation 500C in FIG. 5C depicts the current network layer architecture of the SKYPE for Business solution in the Boston area. In other words, the 2D representation 500C can be viewed as a filtered version (e.g., the network layer) of the current architecture of the SKYPE for Business solution in the Boston area shown in FIG. 5B. FIG. 5D shows another filter version of the current architecture of the SKYPE for Business solution in the Boston area shown in FIG. 5B. Specifically, the visual representation 500D shown in FIG. 5D depicts the subset of assets of the current architecture of the SKYPE for Business solution in the Boston area that are provided by a specific vendor (e.g., CISCO).

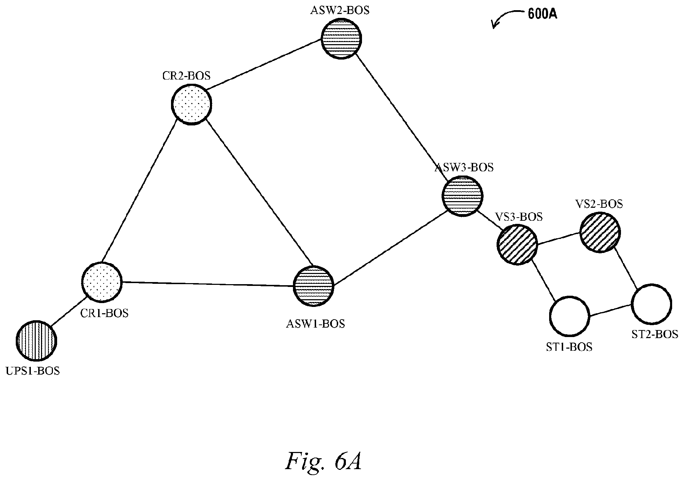

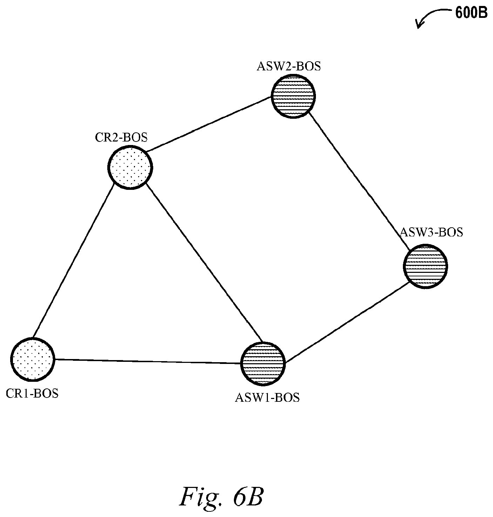

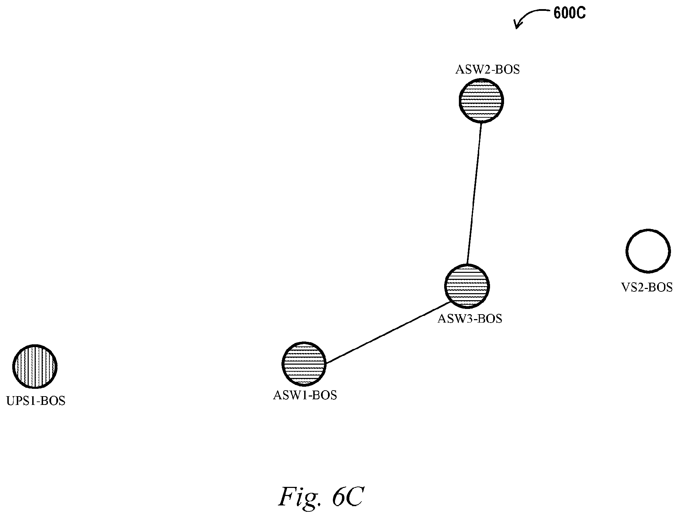

Referring to FIGS. 6A-6C, 3D visual representations 600A-600C of the architectures depicted in FIGS 5B-5C of the SKYPE for Business solution in the Boston area are shown. Specifically, the 3D visual representation 600A corresponds to the 2D visual representation 500B and represents the current architecture of the SKYPE for Business solution in the Boston area. The 3D visual representations 600A-600C can be interactive allowing a user of the CEM system 228 (or a client device 102), for example, to rotate the displayed 3D representations and get different views of the architecture from different angles. As such, the user can identify single points of failure, especially where the displayed architecture is condensed (e.g., having a relatively large number of assets and/or a large number of interconnections). A single point of failure is a node (or asset) that connects two subsets of the solution assets with no other link connecting the two subsets of the solution assets. A single point of failure can be defined within one layer or across multiple layers.

Referring back to FIG. 4, the method 400 can include the CEM system 228 repeating steps 402-412 over time (e.g., periodically or regularly) for a given solution stack or subsystem of the computer ecosystem 200. The CEM system 228 may repeat the method 400 for other solutions stacks or subsystems of the computer ecosystem 200. Once the CEM system 228 constructs the current architectural and/or configuration state of a first solution, the CEM system 228 may do the same for a second solution. The CEM system 228 may generate the current architectural and/or configuration states for all, or a selected subset of, the solutions deployed in the computer environment/ecosystem 200. The CEM system 228 may generate the current architectural and/or configuration states for various deployed solutions sequentially or in parallel.

### C. Solution Stack Monitoring as a Diagnosis Tool

The monitoring of solutions as described herein can allow for fast and efficient diagnosis of various IT problems associated with computer environments, such the computer environment 200. A user of the CEM system 228 can define a group of functionally related assets in the computer environment 200 as a solution and run the CEM system 228 to identify a complete solution stack and/or perform solution monitoring for the solution stack. The solution monitoring can allow for efficient and relatively fast diagnosis of performance or security issues that may arise in relation to group of functionally related assets. For example, a user may define a cluster of virtualization hosts as a solution. Virtual machines (VMs) can move across distinct virtualization hosts in the same cluster. When a VM is consuming high processing power, high memory usage or much of the network resources available, it will affect other VMs running in the same cluster. Also, one VM could be breaching some security requirements (or rules) associated with the computer environment. Given that VMs can move quite often (and possibly repeatedly within short periods of time) between the various virtualization hosts, it is difficult to track the source of the problem.

When a user defines a cluster of virtualization hosts as a solution and runs solution monitoring, the CEM system 228 can perform efficient and relatively fast diagnosis as solution monitoring allows for assessing the solution at various domains and/or various layers and providing the corresponding assessment results.

While the CEM system 228 is described herein as one system that can perform solution stack identification and monitoring, it should be appreciated that one can build separate systems for solution stack identification and solution stack monitoring to perform, for example, the methods 400 and 800, respectively. The CEM system 228 or any separate systems for solution stack identification and solution stack monitoring can include one or more hardware processors (such as processor 121 of FIGS. 1C and 1D) and a memory (e.g., memory 122 of FIGS. 1C and 1D) storing computer code instructions (e.g., CEM software 120 in FIG 1C) thereon. The computer code instructions when executed by the one or more processors can perform any of the methods or processes described in this disclosure. The CEM system 228 can include one or more of the computing devices 100 described with regard to FIGS. 1C and 1D.

### D. Intelligent Segmentation and Rendering of Computer Environment Data

Computer environments, such as enterprise networks, can include thousands of hardware and/or software assets. The architecture of some computer environments can be complex, for example, in terms of the connections and inter-dependencies between various assets. Also, the computer environment architecture as well as the configuration of various assets can change over time post deployment of the computer environment. All these factors make the monitoring and management of the computer environment challenging for IT personnel or system administrators in general. IT personnel or system administrators are usually expected to monitor the security state(s) and operational (or "health") state(s) of the computer environment and the respective assets. The security states relate to the exposure of the computer environment and the respective assets to vulnerabilities and/or cybersecurity holes, threats, or attacks. The operational states relate to resources available to various assets or computer subsystems (e.g., solutions) of the computer environment, the use of such resources at a given point of time (or over time), the speed of performing tasks by the assets and subsystems and/or architectural and configuration aspects of the computer environment and the respective assets, among others.

In general, a computer environment such as computer environment 200 is usually associated with massive multi-dimensional and time varying operational and cybersecurity "health" data. The data can reveal valuable information with respect to, for example, security holes or exposure to security threats or vulnerabilities, affected assets by an ongoing cybersecurity attack, asset or subsystem misconfigurations, architectural aspects and defects of the computer environment 200, or a combination thereof, among others. However, making sense of the data in a comprehensive way can be extremely challenging, especially in emergency situations when the computer environment 200 is, for example, under attack and there is an urgent need for a quick and well-planned response. Specifically, even though the data may provide valuable insights on how to tackle an ongoing (or a potential) attack, threat or other issue, uncovering those insights calls for intelligent segmentation and rendering (or distribution) of the computer environment data.

Given the amount of data available, the multidimensional nature of the data, and any uncertainties about the potential (or ongoing) attack, threat or issue, formulating a coordinated and well-planned response to an ongoing (or potential) attack, threat or other issue calls for identification of the boundaries or extent of exposure of the computer environment 200 as well as the determination of inter-dependencies between various assets at various layers, levels or subsystems of the computer environment 200. Such information can allow for the simultaneous assessment of any actual or potential damage and the effect of any potential remedial action on various layers, levels or subsystems of the computer environment by a plurality of entities. In other words, cybersecurity threats or attacks as well as other undesired incidents can affect the computer environment at one or multiple layers, levels or subsystems, which calls for an assessment of such effects across various layers, levels or subsystems of the computer environment 200. Such assessment can be made possible by intelligently segmenting or dissecting the computer environment data across the various layers, levels or subsystems, and providing various visual views of the assessment results for various entities.

Systems and methods described herein allow for splitting or segmenting (also referred to herein as "slicing") of computer environment data based on, for example, various layers, levels, categories or criteria, and generating a separate visual representation for each segment (or "slice") of the computer environment data. The systems and methods described herein can also allow for serving or distributing distinct visual representations, corresponding to distinct data segments or slices, to different users or IT personnel to allow for parallel monitoring or remedial tasks by a plurality of users or a plurality of computing devices. The CEM system 228 can allow for minimizing the time to find a root cause or source of a problem affecting the computer environment 200, or find an asset of interest. The CEM system 228 can also speed up the process of (i) identifying the IT personnel to be involved in a given monitoring or remedial mission and (ii) distributing or coordinating various tasks among them.

The CEM system 228 can determine the segment (or "slice") of data, including the corresponding visual representation, to be provided to each user or to a corresponding account or computer device. As such, IT personnel do not have to waste time trying to figure out where to start or what to look at to determine the root cause, extent or effect of a problem in the computer environment 200. Instead, each user can receive a visual representation, for example, of a predefined portion of the computer environment 200 defined based on a geographic location, a network or functional layer, an asset type, a solution or computer subsystem, other criterion or category or a combination thereof, among others. For each user, the respective received visual representation can represent a portion of the computer environment 200 of interest to, or a starting point to investigate a given problem for, that user. For each user, the CEM system 228 can determine the respective portion of the computer environment 200 to be rendered or presented for that user based on, for example, the user's profile, job title, responsibilities, qualifications, or geographic location, among others. Accordingly, the systems and methods described herein allow for a parallel and fast approach for monitoring computer environments and addressing any related problems such as cybersecurity threats or attacks.

The systems and methods described herein allow for filtering computer environment data based on one or more filtering criteria, such as attributes associated with a potential or actual cybersecurity threat or attack, vulnerability attributes, attributes associated with operational health (e.g., stress level), compliance attributes or a combination thereof, among others. The filtering can provide a subset of assets, instead of the whole set of assets, for assessing. The filtering can significantly reduce the number of assets to be monitored and/or examined. The systems and methods described herein allow for situational awareness and cybersecurity analysis of the subset of assets, and slicing (or segmentation) of the analysis results across a plurality of layers, levels or subsystems of the computer environment 200. The systems and methods described herein include generating a separate visual representation of each "slice" of the analysis results corresponding to, for example, a respective layer, level or subsystem of the computer environment 200, and distributing the visual representations among a plurality of user accounts or client devices based on, for example, user profiles or assigned user tasks, among others.

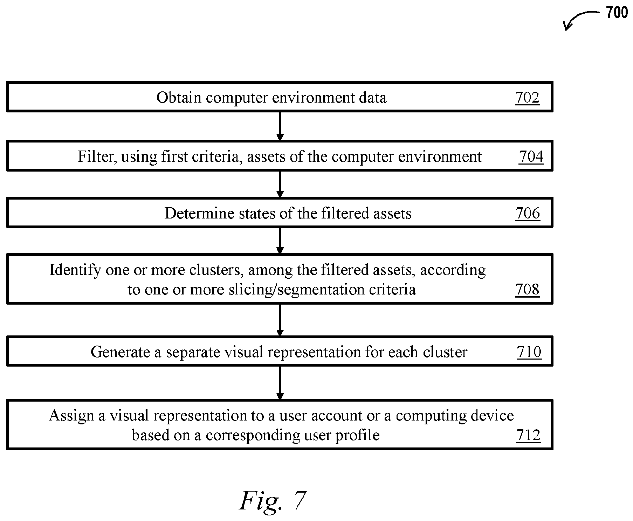

Referring to FIG. 7, a flowchart illustrating a method 700 for intelligent segmentation and rendering of computer environment data, according to example embodiments. The method 700 can include obtaining computer environment data (STEP 702), and filtering assets of the computer environment using first criteria (STEP 704). The method 700 can include determining states of the filtered assets (STEP 706), and identifying one or more clusters of assets, among the filtered assets, using second criteria (or slicing criteria) (STEP 708). The method 700 can include generating a separate visual representation for each cluster of assets (STEP 710), and assigning the visual representation to a user account or a computing device based on user profile associated with the user account or computing device (STEP 712).

The method 700 can include the CEM system 228 obtaining computer environment data (STEP 702). The CEM system 228 can receive the data from one or more data sources. The one or more data sources can include a database, one or more vulnerability scanners, other computer system scanners or a combination thereof, among others. Vulnerability scanners can provide, among others, information indicative of asset names, asset types, asset resources, asset IP addresses, asset operating systems (OSs), software and/or applications associated with each asset, vulnerabilities associated with each asset, or a combination thereof. The CEM system 228 can receive or access data associated with a plurality of vulnerability scanners. The CEM system 228 can compare, e.g., for a given asset or each asset of the computer environment 200, corresponding data received from various data sources and merge the data in a data structure such as a table. The computer environment data can include communication logs for one or more assets. The communication logs for an asset can include indications of communications between the asset and one or more other assets of the computer environment 200, for example, within a given time period.

The CEM system 228 can query a database storing monitoring data previously generated by vulnerability scanners or other computer system scanners. The CEM system 228 can send a request for the computer environment data to the database either on a regular basis or responsive to a detected event or incident. For example, the CEM system 228 can detect a cybersecurity threat or attack or identify a recently published vulnerability. The CEM system 228 can obtain data indicative of the architecture of the computer environment 200, assets' configuration data, situational awareness data, network data, communication logs data, firewall (or other cybersecurity) data or a combination thereof, among others.

The CEM system 228 can request monitoring data associated with a specific time period from the database. The time period can be defined, for example, in terms of a time instant associated with the detected event. For example, the CEM system 228 can request computer environment data for a time period that starts prior to the detected event or incident and extends to a current time instant or a time instant after the detection of the cyber security event or incident. Using monitoring data acquired or collected over some time duration can allow the CEM system 228, for example, to reconstruct the response of the computer environment 200 to a cybersecurity attack or other event over the time duration, such as the progress of assets infection by a malware or other threat.

The method 700 can include the CEM system 228 filtering assets of the computer environment 200 based on one or more first criteria (STEP 704). The filtering criteria (or first criteria) can include an asset type, platform type, operating system, geographical area, time interval, a solution identifier/indicator, exposure to a cybersecurity threat or attack, exposure to a specific vulnerability or a combination thereof, among others. The CEM system 228 can apply a plurality of filters, based on a corresponding plurality of criteria, to the assets of the computer environment 200 or the acquired computer environment data. The filtering can allow for a significant reduction in the number of assets to be considered for further analysis or examination. Starting, for example, with thousands of assets in the computer environment 200, the CEM system 228 can identify, as a result of the filtering, a subset of few hundred assets for further extensive analysis or examination. In other words, the computer environment data acquired by the CEM system 228 may not include enough information or sufficiently detailed information to allow for, for example, the identification or localization of the boundaries of a problem within the computer environment 200. The reduction in the number of assets of interest allows for relatively deep and extensive analysis of the data associated with the identified subset of assets.

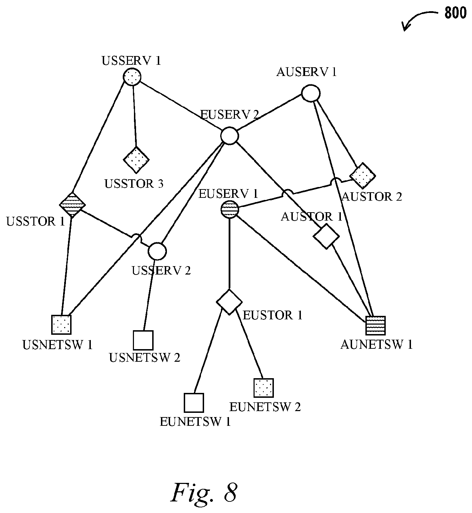

Referring to FIG. 8, a diagram illustrating an example network of assets 800 associated with a computer environment, according to example embodiments. The network of assets 800 can extend over multiple geographical regions, in this case the United States of America (US), Europe (EU) and Australia (AU). The network of assets 800 can include assets of various types, such as servers, storage devices, and network switches. Each server is shown as a circle and the respective name includes the string "SERV." Each storage device is shown as a diamond and the respective name includes the string "STOR." Each network switch is shown as a square and the respective name includes the string "NETSW." The filling pattern of each asset in the network of assets 800 can be indicative of a corresponding solution or solution stack to which that asset belongs.

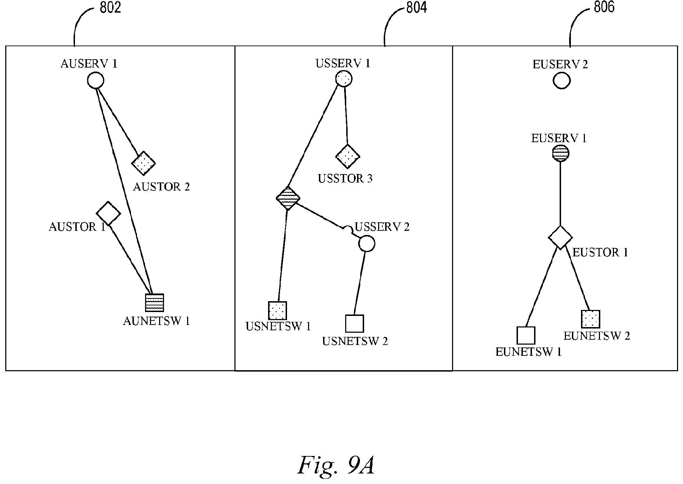

Referring to FIGS. 9A-9C, example filtered versions of network of assets 800 are shown. Specifically, FIG. 9A shows example filtering based on geographical areas. For example, the sub-network 802 represents the portion of the network of assets 800 located in Australia. The sub-network 804 represents the portion of the network of assets 800 located in the United States of America. The sub-network 806 represents the portion of the network of assets 800 located in Europe.

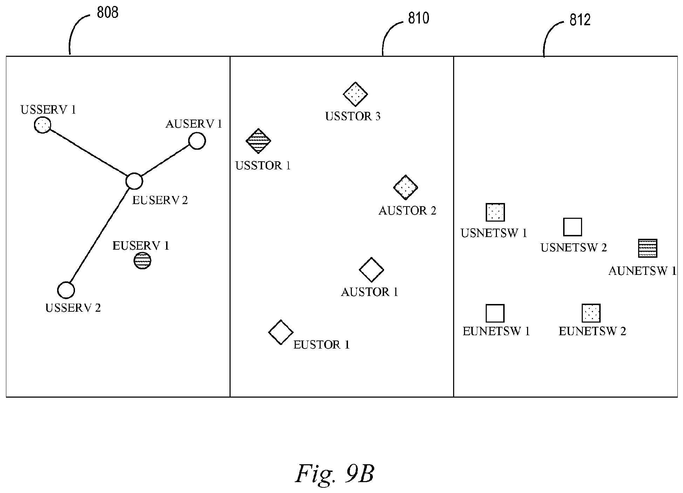

FIG. 9B shows example filtering of the network of assets 800 based on asset type. For example, the sub-network 808 represents servers of the network of assets 800 across the geographical areas. The sub-network 810 represents the storage devices of the network of assets 800 across the geographical areas. The sub-network 812 represents the portion of the network of assets 800 across the geographical areas.

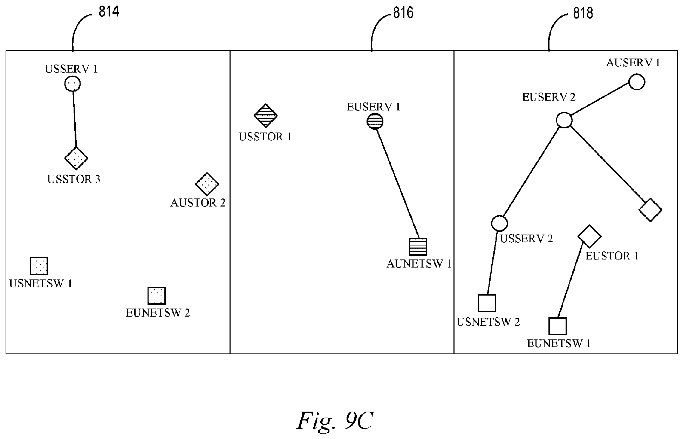

FIG. 9C shows example filtering of the network of assets 800 based on various solutions or solution stacks. Each of the sub-networks 814, 816 and 818 represents a sub-network of a separate solution or solution stack. As depicted through the sub-networks 814, 816 and 818, assets of a solution or a solution stack can be distributed over a plurality of geographical locations or regions. Also, a solution or solution stack can include assets of different types.

The CEM system 228 can apply the filtering of the assets based on a problem, future threat, current or ongoing cybersecurity attack, or other incident (e.g., abnormal operational state) associated with the computer environment 200. For example, upon becoming aware of a newly published vulnerability, the CEM system 228 can use information related to the vulnerability and/or the computer environment data to filter the assets of the computer environment 200. Specifically, if the vulnerability relates to servers with a given operating system, the CEM system 228 can identify such servers in the computer environment 200 and filter out the rest of the assets. In the case where the computer environment 200 is facing a given cybersecurity threat or attack, the CEM system 228 can use the computer environment data to identify assets of the computer environment 200 exposed to such threat or attack. For instance, the cybersecurity threat or attack may be specific to or targeting email servers in which case the CEM system 228 can identify email servers or assets associated with an email service among the assets of the computer environment 200. In some other instances, the cybersecurity threat or attack may be relevant to assets associated with a specific vendor, in which case the CEM system 228 may identify assets associated with the vendor.

Referring back to FIG. 7, the method 700 can include determining states of the filtered assets of the computer environment 200 (STEP 706). The CEM system 228 can analyze the computer environment data to determine, for each asset of the filtered assets, one or more corresponding current or recent states. The asset state can include a cybersecurity state of the asset, a risk score of the asset, a rank of the asset, a stress level of the asset, a compliance state of the asset, configuration settings of the asset, dependencies of the asset, communications of the asset with a predefined time interval or a combination thereof, among others. For instance, the CEM system 228 can identify dependency states (or dependencies) of the filtered assets. For example, the CEM system 228 can identify, for each asset of the filtered assets, other assets on which that asset depends or relies, and/or other assets of the computer environment 200 that depend or rely on that asset.

The CEM system 228 can assess health states of the filtered assets, including determining a stress level of each asset, e.g., indicative of a level or amount of resource usage by the asset. The CEM system 228 may determine resource usage, responsiveness, processing speed or running processes associated with the filtered assets. For example, the CEM system 228 can determine CPU usage, memory or storage usage, bandwidth usage, status of communication links (e.g., down or operating) or a combination thereof for each asset of the filtered assets. The CEM system 228 can assess security (or cybersecurity) states of the filtered assets. For example, the CEM system 228 can identify vulnerabilities, security holes, or exposure to predefined threats or misconfigurations, among others, associated with each of the filtered assets. The CEM system 228 determine (or identify) recent events associated with the filtered assets. For example, the CEM system 228 can determine, for each of the filtered assets, recent communications (or communications made during a predefined time interval), current configuration settings, recent changes to configuration settings and/or changes in usage of resources, among others. The CEM system 228 can determine compliance states for the filtered assets. For instance, the CEM system 228 can determine whether any of the filtered assets violates any of the compliance policies associated with the computer environment 200. The CEM system 228 determine risk factors or risk scores for the filtered assets. For instance, the CEM system 228 can determine for each asset of the filtered assets respective risk factors or a respective risk score based on the security state, the health state or other states of the asset.

The CEM system 228 can profile, or can cause another device or system to profile, the filtered assets or one or more other assets of the computer environment 200 to acquire additional information (besides the computer environment data acquired at STEP 702). The CEM system 228 can use the additional information, e.g., together with the initially acquired computer environment data, for assessing various states of the filtered assets. For instance, the CEM system 228 can query another asset of the computer environment 200, such as a communication log database, a configuration log database, a network statistics database, a hypervisor (e.g., VMware workstation) or a combination thereof, among others, which may hold information about one or more filtered assets. The CEM system 228 can query one or more assets connected to, or that recently communicated with, a non-responding asset of the filtered assets for information regarding the non-responding asset. The CEM system 228 can cause one or more vulnerability scanners, or other system computer scanners, to perform a new scan of the computer environment 200 or a portion thereof, to get new up to date data.

The CEM system 228 can request connectivity tables, communication logs or a combination thereof, for example when profiling a filtered asset, to identify other assets that are connected to or have communicated with the filtered asset. The CEM system 228 can request the asset description, configuration logs, or other information of the filtered asset, for example, as part of the asset profiling process. The asset description and/or the configuration logs can include, among others, asset name, asset type, asset IP address, an indication of a role or purpose of that asset, whether the asset belongs to any solution or subsystem, the operating system (OS) and/or other software associated with the asset, memory resources, processing resources, description or type of data stored in or associated with the asset, network zone, security zone, NetBios information, storage information, power source information, network information including other assets connected to the selected asset, or a combination thereof. The CEM system 228 can check one or more application programming interfaces (APIs) associated with a software or application associated with or running on the filtered asset, for example, to determine interactions with other assets if any.

The CEM system 228 can compare data received from various sources to identify any changes or discrepancies in the data associated with the filtered assets. Discrepancies between initially acquired data (at STEP 702) and data acquired during STEP 706 for a given filtered asset can be indicative of a recent problem affecting the asset. For example, a discrepancy concerning an IP address or a security zone of the filtered asset can be indicative of an exposure of the asset to a cybersecurity attack. The CEM system 228 can use the data acquired at STEP 702 and the data acquired as part of the analysis process at STEP 706 to determine various states of the filtered assets. The CEM system 228 can augment the data acquired at STEP 702 for the filtered assets with data acquired (e.g., through asset profiling) at STEP 706. The CEM system 228 can augment the set of filtered assets with additional assets of the computer environment 200. For example, the CEM system 228 can add other assets that depend on one or more filtered assets, or on which one or more filtered assets depend, to the set of filtered assets.

The method 700 can include the CEM system 228 identifying according to one or more second criteria (or slicing criteria) one or more asset clusters among the set of filtered assets (STEP 708). Each asset cluster (also referred to herein as a slice or segment of the set of filtered asset) can include assets of the filtered set of assets identified based on corresponding values of the one or more slicing (or second) criteria. In some implementations, the each slice may be of interest to one or more users associated with a corresponding user profile or job role. The user profile can include a profile of a single user or a team profile, for example, of a team of IT personnel or system administrators. In some implementations, the slices may be identified or generated based on predefined (e.g., maintained by the CEM system 228) or user selected slicing criteria. The one or more second (or slicing) criteria can include an asset category or layer (e.g., storage, network, virtual machine, power supply, etc.) an asset functionality (e.g., email service, messaging, database, etc.), an asset type (e.g., servers, mobile devices, client devices, software applications, data files, etc.), solutions or solution stacks, a geolocation, one or more user profiles or a combination thereof, among others.

The CEM system 228 can generate the asset clusters based on, for example, asset functionalities, asset types, asset states, user profiles of users of interest (e.g., system administrators), asset owners, network layers, platforms, solution stacks, or a combination thereof, among others. For instance, the CEM system 228 can identify distinct asset clusters that show different aspects (e.g., security, compliance, or operational health) of the set of filtered assets. For example, the asset cluster related to security can show the assets of the set of filtered assets that suffer (or are exposed to) security problems, the asset cluster related to compliance can include mainly the assets of the set of filtered assets that violate one or more compliance policies, and the asset cluster related to operations health can include mainly include the assets of the set of filtered assets that are under stress. The CEM system 228 can identify an asset cluster representing assets of the set of filtered assets that are associated with a given layer, platform or asset type.

The criteria used to identify various asset clusters of the set of filtered assets can be predefined. The criteria can be defined based on user profiles for various system administrators, IT personnel or other employees associated with the computer environment 200. For example, the CEM system 228 can identify (or generate) a cluster of assets representing mainly network assets that is of interest to an IT staff member who is responsible of network related tasks. The CEM system 228 can identify (or generate) a cluster of assets representing mainly storage assets that is of interest to an IT staff member who is responsible of storage related tasks. The CEM system 228 may identify (or generate) a cluster of assets (not necessarily many clusters), from the filtered assets, based on predefined criteria (or second criteria), such as a user/employee profile, functional layers or categories, asset types, architectures of different solutions or a combination thereof, among others.

The asset clusters can be viewed as different slices of the set of filtered assets depicting different aspects (e.g., based on different values of the slicing criteria) of the set of filtered assets. Such clustering/slicing further reduces the number of assets to be presented to a given user (or an IT staff member or system administrator). For example, the set of filtered assets can include hundreds of assets whereas a cluster can include tens or even less than twenty assets. Each cluster of assets can be viewed as representing a corresponding subset of the filtered assets associated with some asset category or some asset attributes, and meant to illustrate (or focus on) aspects or problems of the filtered assets in relation to the corresponding asset category or attributes. The CEM system 228 can determine the portion or type of computer environment data to be associated with each of the asset clusters or slices. For instance, data associated with a network cluster can mainly be related to network devices and network problems or issues, whereas data associated with a storage cluster can include mainly data related to a respective storage system. Breaking/slicing the set of filtered assets into multiple asset clusters or slices that can be smaller in size than the set of filtered assets (or emphasizing a subset of the set of filtered assets), and focused on different aspects or layers of the filtered set of assets, can allow for an efficient and reliable way of directing users (or IT personnel) to different angles or views of problems that the computer environment 200 is (or may be) facing.

The method 700 can include the CEM system 228 generating a separate visual representation for each asset cluster (STEP 710). The visual representation can be a 2D representation or a 3D representation. For instance, the visual representations can be similar to the networks shown in FIGS. 9A-9C where nodes represent assets in the corresponding cluster and the links between the nodes can represent inter-dependencies or connections between corresponding assets. Visual features of a visual representation, such as shape, size and/or color of each node, or length, thickness and/or color of each link can be representative of a corresponding feature or attribute of an asset within the corresponding asset cluster.

Generating the visual representation of a cluster of assets may include the CEM system 228 generating a 2D or 3D model representing an architecture of the cluster. Visual features, such as shape, size or color, of each asset in the generated model can represent a corresponding feature or attribute of the corresponding asset. For example, the shape of a depiction of an asset in the generated model can represent the type of the asset. The size of the asset depiction may represent a rank of the asset, a risk score of the asset or a severity of a problem affecting the asset. The color of an asset depiction may represent a geographical location of the corresponding asset or a solution to which the asset belongs. The CEM system 228 may employ other correspondence between the visual features of asset depictions in the 3D or 2D model and asset attributes when generating the 2Dor 3D model.

Generating the visual representation can include the CEM system 228 augmenting the 2D or 3D model with metadata of corresponding assets. For instance, the CEM system 228 may generate an interactive 2D or 3D model of an identified cluster of assets. Upon interaction with an asset depiction in a displayed model of an identified cluster of assets, metadata associated with the corresponding asset will be presented. In some implementations, the metadata of the assets may be used to further filter the visual representation of the cluster of assets. For example, the visual representation of the cluster of assets may be displayed within a user interface (UI) including tabs or icons to filter the visual representation. For example, the visual representation of the cluster when displayed can be further filtered, e.g., responsive to a user input, based on one or more criteria specified by a user. The displayed visual representation can be filtered based on a geolocation, asset type, a vendor or other criterion. In some implementations, the interactive model may be rotated, zoomed in or zoomed out, among other possible interactive operations.

In some implementations, the identification of asset cluster(s) and the generation of the visual representation(s) (e.g., STEPs 708 and 710) can be viewed as a single step. That is, the CEM system 228 can generate the visual representations based on corresponding asset clusters determined based on the second criteria.

The method 700 can include the CEM system 228 assigning a visual representation to a user account or a computing device based on a user profile (STEP 712). The CEM system 228 can use, for example, user profiles of IT personnel members to assign each visual representation and/or respective data to a separate (or corresponding) user account or computing device based on a user profile associated with the user account or the computing device. For instance, the CEM system 228 can use data indicative of the roles and responsibilities of various staff members, or teams, in an organization to determine which asset cluster (or corresponding visual representation) is of interest to a given IT staff member or team. The CEM system 228 can assign and/or provide (or distribute) the visual representation (and any corresponding data) to a user account associated with the IT staff member, a system administrator or a team. In some implementations, when the staff member, employee or team member logs in to the respective user account, a computing device can automatically display the visual representation or an indication of the existence of a new visual representation. In some implementations, the CEM system 228 can send the visual representation and/or corresponding data to a component of an automatic healing system configured to automatically diagnose and/or fix problems associated with the computer environment 200.

In some implementations, the CEM system 228 may generate visual representations of various slices or asset clusters and make them available for access by various users (e.g., not necessarily assigning different slices to different users). The CMM system 228 may provide the visual representations (or provide access thereto) responsive to received requests. The CEMM system 228 my generate the various slices based on predefined (or maintained) or user selected slicing criteria. The CEM system 228 may maintain different sets of slicing criteria. Each set of slicing criteria may be mapped to a different type of scenario. The CEM system may select the set of slicing criteria, among the different sets, based on a detected or determined scenario (e.g., cybersecurity issue, compliance issue or operational health issue, among others.

Generating and assigning different visual representations reflecting different aspects of the computer environment or ecosystem 200 to separate users, user accounts or computing devices based on respective user profiles can put system administrators or IT personnel (or other users) in the picture of what's happening in the computer environment. The visual representation assigned/provided to the system administrators or IT personnel can represent assets of the set of filtered assets of interest to them or reflecting one or more aspects of the computer environment 200, or a subsystem thereof, within their expertise or role in the organization associated with the computer environment 200.

The visual representation can be an interactive visual representation allowing the user, for example, to view additional asset information (not initially shown in the visual representation), filter the assets represented by the visual representation or switch to a visual representation of another asset cluster, among others. For example, upon interaction with the visual representation rendered on a computing device, the computing device can display additional information related to a given asset, display a different visual representation corresponding to another asset cluster, filter the visual representation, or augment the visual representation with additional data.

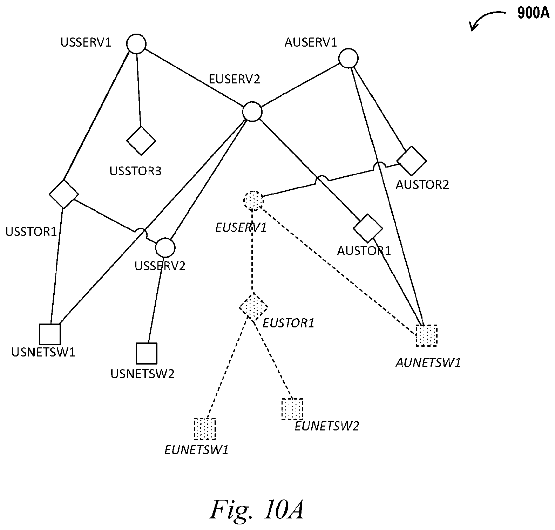

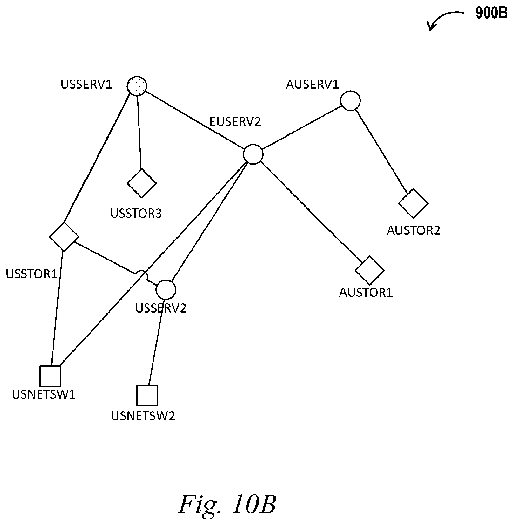

FIGS. 10A-10B show two different visual representations 900A and 900B of a solution in a computer environment, according to example embodiments. The computer environment in FIGS. 10A and 10B is similar to that in FIG. 8, except that the solutions are different from those in FIG. 8. The nodes shown in continuous lines represent assets of a solution A. The nodes with dashed boundary and dotted pattern represent assets not part of solution A. The visual representation 900A can show all assets of the computer environment while emphasizing the nodes representing assets of solution A (e.g., shown in continuous lines) and de-emphasizing or fading nodes representing assets not part of solution A. For example, nodes that represent assets not part of solution A can be shown in with a faded contrast/color (e.g., light gray) or in dashes lines, among others. Such type of visual representation allows a user to still see the whole computer environment while focusing on the emphasized solution or subsystem. Also, in the visual representation 900A, connections or dependencies associated with nodes representing assets of solution A can be emphasized (e.g., continuous dark links), while connections or dependencies associated with nodes representing assets not part of solution A can be de-emphasized (e.g., dashed and/or light gray links). In the visual representation 900B, only nodes representing assets of solution A and connections or dependencies between them are shown. In some implementations, the visual representation 900B can show all connections or dependencies (including those with assets not part of solution A) associated with assets of solution A.

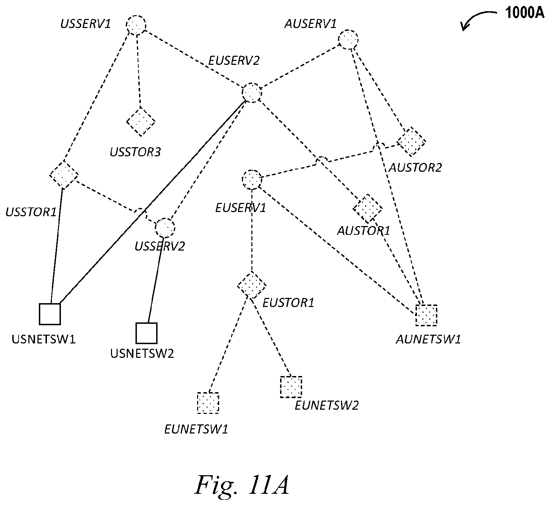

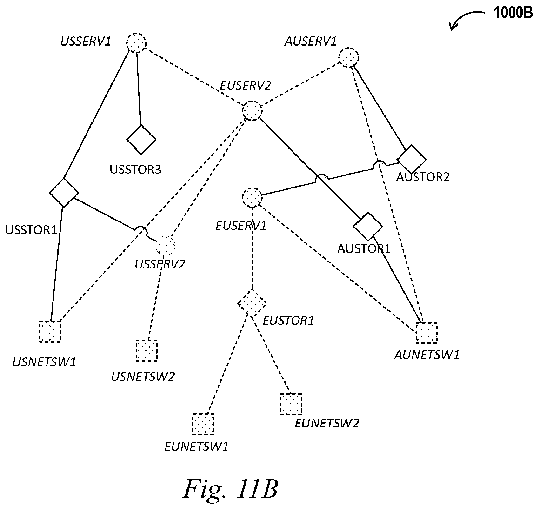

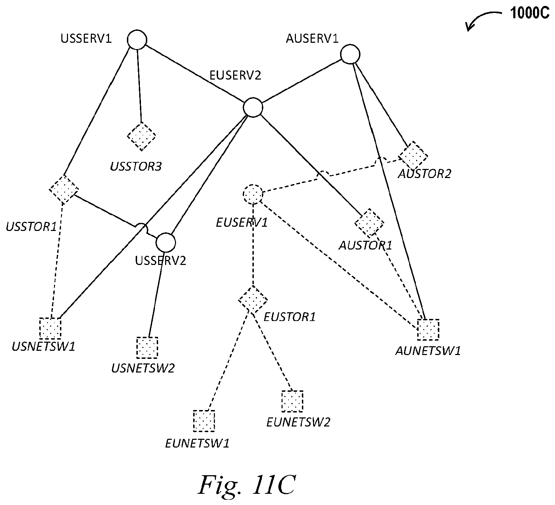

FIGS. 11A-11C show visual representations 1000A-1000C of a first set of slices of the solution shown in FIGS. 10A and 10B, according to example embodiments. The visual representations 1000A-1000C illustrate one way of slicing/segmenting solution A. The slicing or segmentation (e.g., the way the asset clusters are identified) is based on asset categories (or asset layers). The visual representation 1000A in FIG. 11A represents the network layer of solution A, the visual representation 1000B in FIG. 11B represents the storage layer of solution A, and the visual representation 1000C in FIG. 11C represents the server layer of solution A. Referring back to method 700 in FIG. 7, the CEM system 228 may first filter the computer environment to identify assets of solution A (as shown in FIGS. 10A and 10B). The filtering may be based on a detected incident or problem associated with solution A or a predefined setting to monitor solution A. The CEM system 228 may then slice or segment solution A into different slices (or segments or asset clusters). Each slice (or asset cluster) can correspond to different values (e.g., network layer, storage layer or server layer) of the slicing or segmentation criteria (asset category/layer). The slicing may be based on different roles of IT staff members (or system administrators) or based on predefined slicing criteria.

It is to be noted that the visual representations 1000A-1000C show all assets of solution A, but each slice emphasizes (e.g., continuous black lines) the assets and connections (or dependencies) associated with the corresponding the slice and de-emphasizes (e.g., dashed and/or light gray lines) the assets and connections (or dependencies) that are not part of the slice.

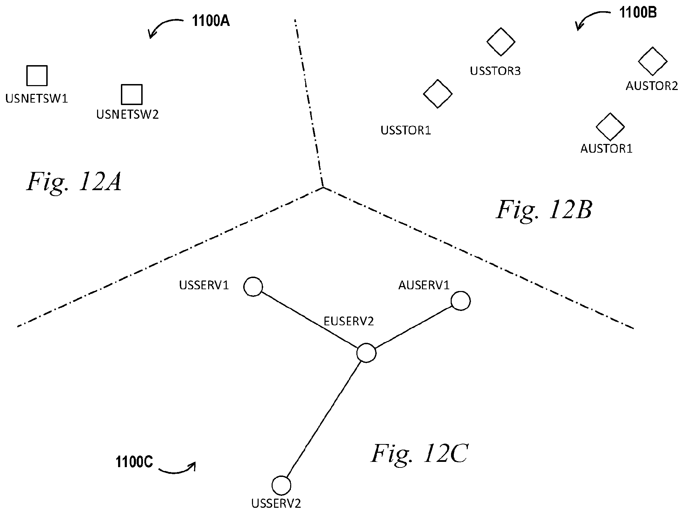

FIGS. 12A-12C show other visual representations 1100A-1100C of the first set of slices in 11A-11C, respectively, according to example embodiments. Specifically, the visual representation 1100A depicts only assets and connections (or dependencies) of the slice shown in FIG. 11A, the visual representation 1100B depicts only assets and connections (or dependencies) of the slice shown in FIG. 11B, and the visual representation 1100C depicts only assets and connections (or dependencies) of the slice shown in FIG. 11C. In other words, the visual representations 1000A-1000C and 1100A-1100C illustrate the same set of slices of solution A but I different ways.

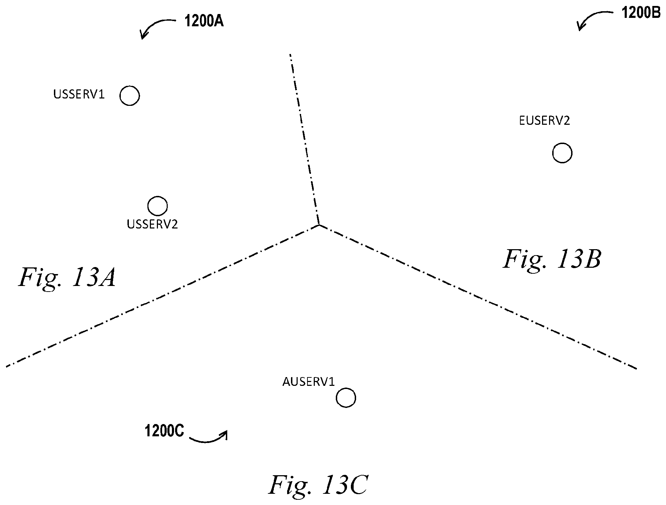

FIGS. 13A-13C show visual representations 1200A-1200C of a second set of slices of the solution shown in FIGS. 10A and 10B, according to example embodiments. The visual representations 1200A-1200C illustrate another way of slicing/segmenting solution A. The slicing or segmentation is based on a specific asset category (here the server layer) and geolocation. The visual representation 1200A in FIG. 13A represents the server layer of solution A in the United States, the visual representation 1200B in FIG. 13B represents the server layer of solution A in Europe, and the visual representation 1200C in FIG. 13C represents the server layer of solution A in Australia. Referring back to method 700 in FIG. 7, the CEM system 228 may first filter the computer environment to identify assets of solution A (as shown in FIGS. 10A and 10B), and then generate different slices (based on geolocation) of the server layer of solution A. The CEM system 228 may generate similar geolocation slices of other layers, such as the storage layer and/or the network layer (not shown in FIGS. 13A-13C. The filtering may be based on a detected incident or problem associated with solution A or a predefined setting to monitor solution A. The slicing may be based on different roles of IT staff members (or system administrators) or based on predefined slicing criteria.

Each method described in this disclosure can be carried out by computer code instructions stored on computer-readable medium. The computer code instructions, when executed by one or more processors of a computing device, can cause the computing device to perform that method.

References to "or" may be construed as inclusive so that any terms described using "or" may indicate any of a single, more than one, and all of the described terms.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain embodiments, multitasking and parallel processing may be advantageous.

## Claims

1. A method comprising:
receiving (702), by a computer system including one or more processors, data of a computer environment including a plurality of assets;
filtering (704), by the computer system, using the data and one or more first criteria, the plurality of assets to identify a set of filtered assets;
determining (706), by the computer system, using the data, a state of each asset of the set of filtered assets;
identifying (708), by the computer system, a plurality of asset clusters within the set of filtered assets using states of the set of filtered assets and second criteria for clustering the set of filtered assets, the second criteria defined based on user profiles for various users of the computer environment, each asset cluster including assets of the set of filtered assets of interest to one or more users associated with a corresponding user profile and identified based on corresponding asset states and corresponding values of the one or more second criteria;
generating (710), by the computer system, a visual representation of an asset cluster of the plurality of asset clusters; and
assigning (712), by the computer system, the visual representation to a user account or a computing device for rendering based on a user profile associated with the user account or computing device.

2. The method of claim 1, wherein the one or more first criteria include at least one of:
exposure to a cybersecurity threat or attack;
exposure to a specific vulnerability;
an asset type;
a solution stack; or
a geolocation.

3. The method of claim 1, wherein the state of each asset of the set of filtered assets includes at least one of:
a cybersecurity state of the asset;
a risk score of the asset;
a rank of the asset;
a stress level of the asset;
a compliance state of the asset;
configuration settings of the asset;
dependencies of the asset; or
communications of the asset with a predefined time interval.

4. The method of claim 1, wherein the one or more second criteria include at least one of:
an asset category;
an asset functionality;
an asset type;
a solution stack;
a geolocation; or
one or more user profiles.

5. The method of claim 1, wherein generating the visual representation of the asset cluster includes generating a three-dimensional, 3D, model of the asset cluster.

6. The method of claim 5, further comprising augmenting the three dimensional, 3D, model with metadata of assets of the asset cluster of the one or more asset clusters.

7. The method of claim 1, wherein the visual representation of the asset cluster is an interactive visual representation.

8. The method of claim 1, further comprising transmitting (712) the visual representation to the computing device associated with the user profile.

9. The method of claim 1, wherein the user profile includes a team profile.

10. A computer-readable medium with computer code instructions stored thereon, wherein the computer code instructions when executed by one or more processors (121) cause the one or more processors to perform the steps of the method of any one of claims 1 to 9.

11. A system comprising:
one or more processors (121) and a memory (122, 128, 140), configured to cause the system to perform the steps of the method according to any one of claims 1 to 9.

## Patentansprüche

1. Ein Verfahren, beinhaltend:
Empfangen (702), durch ein Computersystem, das einen oder mehrere Prozessoren umfasst, von Daten einer Computerumgebung, die eine Vielzahl von Assets umfasst;
Filtern (704), durch das Computersystem, unter Verwendung der Daten und eines oder mehrerer erster Kriterien, der Vielzahl von Assets, um einen Satz gefilterter Assets zu identifizieren;
Bestimmen (706), durch das Computersystem, unter Verwendung der Daten, eines Zustands jedes Assets des Satzes gefilterter Assets;
Identifizieren (708), durch das Computersystem, einer Vielzahl von Asset-Clustern innerhalb des Satzes gefilterter Assets unter Verwendung von Zuständen des Satzes gefilterter Assets und zweiter Kriterien zum Clustern des Satzes gefilterter Assets, wobei die zweiten Kriterien basierend auf Benutzerprofilen für verschiedene Benutzer der Computerumgebung definiert werden, wobei jeder Asset-Cluster Assets des Satzes gefilterter Assets umfasst, die für einen oder mehrere Benutzer, die mit einem entsprechenden Benutzerprofil assoziiert sind, von Interesse sind und basierend auf entsprechenden Asset-Zuständen und entsprechenden Werten des einen oder der mehreren zweiten Kriterien identifiziert werden;
Generieren (710), durch das Computersystem, einer visuellen Darstellung eines Asset-Clusters der Vielzahl von Asset-Clustern; und
Zuweisen (712), durch das Computersystem, der visuellen Darstellung zu einem Benutzerkonto oder einer Rechenvorrichtung zur Wiedergabe basierend auf einem Benutzerprofil, das mit dem Benutzerkonto oder der Rechenvorrichtung assoziiert ist.

2. Verfahren gemäß Anspruch 1, wobei das eine oder die mehreren ersten Kriterien mindestens eines von Folgendem umfassen:
eine Gefährdung durch eine Cybersicherheitsbedrohung oder einen Cybersicherheitsangriff;
eine Gefährdung durch eine spezifische Schwachstelle;
einen Asset-Typ;
einen Lösungs-Stack; oder
eine Geolokalisierung.

3. Verfahren gemäß Anspruch 1, wobei der Zustand jedes Assets des Satzes gefilterter Assets mindestens eines von Folgendem umfasst:
einen Cybersicherheitszustand des Assets;
einen Risiko-Score des Assets;
einen Rang des Assets;
ein Stressniveau des Assets;
einen Einhaltungszustand des Assets;
Konfigurationseinstellungen des Assets;
Abhängigkeiten des Assets; oder
Kommunikationen des Assets mit einem vordefinierten Zeitintervall.

4. Verfahren gemäß Anspruch 1, wobei das eine oder die mehreren zweiten Kriterien mindestens eines von Folgendem umfassen:
eine Asset-Kategorie;
eine Asset-Funktionalität;
einen Asset-Typ;
einen Lösungs-Stack;
eine Geolokalisierung; oder
ein oder mehrere Benutzerprofile.

5. Verfahren gemäß Anspruch 1, wobei das Generieren der visuellen Darstellung des Asset-Clusters das Generieren eines dreidimensionalen Modells, 3D-Modells, des Asset-Clusters umfasst.

6. Verfahren gemäß Anspruch 5, ferner beinhaltend das Erweitern des dreidimensionalen Modells, 3D-Modells, mit Metadaten von Assets des Asset-Clusters des einen oder der mehreren Asset-Cluster.

7. Verfahren gemäß Anspruch 1, wobei die visuelle Darstellung des Asset-Clusters eine interaktive visuelle Darstellung ist.

8. Verfahren gemäß Anspruch 1, ferner beinhaltend das Übertragen (712) der visuellen Darstellung an die Rechenvorrichtung, die mit dem Benutzerprofil assoziiert ist.

9. Verfahren gemäß Anspruch 1, wobei das Benutzerprofil ein Teamprofil umfasst.

10. Ein computerlesbares Medium, auf dem Computercodeanweisungen gespeichert sind, wobei die Computercodeanweisungen bei Ausführung durch einen oder mehrere Prozessoren (121) bewirken, dass der eine oder die mehreren Prozessoren die Schritte des Verfahrens gemäß einem der Ansprüche 1 bis 9 durchführen.

11. Ein System, beinhaltend:
einen oder mehrere Prozessoren (121) und einen Speicher (122, 128, 140), die konfiguriert sind, um zu bewirken, dass das System die Schritte des Verfahrens gemäß einem der Ansprüche 1 bis 9 durchführt.

## Revendications

1. Un procédé comprenant :
la réception (702), par un système informatique incluant un ou plusieurs processeurs, de données d'un environnement informatique incluant une pluralité d'actifs ;
le filtrage (704), par le système informatique, à l'aide des données et d'un ou de plusieurs premiers critères, de la pluralité d'actifs pour identifier un ensemble d'actifs filtrés ;
la détermination (706), par le système informatique, à l'aide des données, d'un état de chaque actif de l'ensemble d'actifs filtrés ;
l'identification (708), par le système informatique, d'une pluralité de grappes d'actifs à l'intérieur de l'ensemble d'actifs filtrés à l'aide d'états de l'ensemble d'actifs filtrés et de deuxièmes critères pour la mise en grappes de l'ensemble d'actifs filtrés, les deuxièmes critères étant définis sur la base de profils d'utilisateur pour divers utilisateurs de l'environnement informatique, chaque grappe d'actifs incluant des actifs de l'ensemble d'actifs filtrés présentant un intérêt pour un ou plusieurs utilisateurs associés à un profil d'utilisateur correspondant et identifiés sur la base d'états d'actif correspondants et de valeurs correspondantes des un ou plusieurs deuxièmes critères ;
la génération (710), par le système informatique, d'une représentation visuelle d'une grappe d'actifs de la pluralité de grappes d'actifs ; et
l'attribution (712), par le système informatique, de la représentation visuelle à un compte utilisateur ou à un dispositif informatique, en vue de son rendu, sur la base d'un profil d'utilisateur associé au compte utilisateur ou au dispositif informatique.

2. Le procédé de la revendication 1, dans lequel les un ou plusieurs premiers critères incluent au moins un des suivants :
l'exposition à une menace ou attaque de cybersécurité ;
l'exposition à une vulnérabilité spécifique ;
un type d'actif ;
un écosystème de solution (*solution stack*) ; ou
un emplacement géographique.

3. Le procédé de la revendication 1, dans lequel l'état de chaque actif de l'ensemble d'actifs filtrés inclut au moins un des suivants :
un état de cybersécurité de l'actif ;
un score de risque de l'actif ;
un classement de l'actif ;
un niveau de sollicitation de l'actif ;
un niveau de conformité de l'actif ;
des réglages de configuration de l'actif ;
des dépendances de l'actif ; ou
des communications de l'actif avec un intervalle de temps prédéfini.

4. Le procédé de la revendication 1, dans lequel les un ou plusieurs deuxièmes critères incluent au moins un des suivants :
une catégorie d'actif ;
une fonctionnalité d'actif ;
un type d'actif ;
un écosystème de solution ;
un emplacement géographique ; ou
un ou plusieurs profils d'utilisateur.

5. Le procédé de la revendication 1, dans lequel la génération de la représentation visuelle de la grappe d'actifs inclut la génération d'un modèle tridimensionnel, 3D, de la grappe d'actifs.

6. Le procédé de la revendication 5, comprenant en outre l'augmentation du modèle tridimensionnel, 3D, avec des métadonnées d'actifs de la grappe d'actifs des une ou plusieurs grappes d'actifs.

7. Le procédé de la revendication 1, dans lequel la représentation visuelle de la grappe d'actifs est une représentation visuelle interactive.

8. Le procédé de la revendication 1, comprenant en outre la transmission (712) de la représentation visuelle au dispositif informatique associé au profil d'utilisateur.

9. Le procédé de la revendication 1, dans lequel le profil d'utilisateur inclut un profil d'équipe.

10. Un support lisible par ordinateur sur lequel sont stockées des instructions de code informatique, dans lequel les instructions de code informatique, lorsqu'elles sont exécutées par un ou plusieurs processeurs (121), amènent les un ou plusieurs processeurs à effectuer les étapes du procédé de l'une quelconque des revendications 1 à 9.

11. Un système comprenant :
un ou plusieurs processeurs (121) et une mémoire (122, 128, 140), configurés pour amener le système à effectuer les étapes du procédé selon l'une quelconque des revendications 1 à 9.
